(19) Europäisches Patentamt
European Patent Office
Office européen des brevets

(11) **EP 4 421 051 B1**

(12) **EUROPEAN PATENT SPECIFICATION**

(45) Date of publication and mention of the grant of the patent:
**18.03.2026 Bulletin 2026/12**

(21) Application number: **22883506.2**

(22) Date of filing: **14.10.2022**

(51) International Patent Classification (IPC):
$C01F\ 7/02^{(2022.01)}$    $C01F\ 7/023^{(2022.01)}$
$C01F\ 7/448^{(2022.01)}$    $C04B\ 35/111^{(2006.01)}$
$C04B\ 35/117^{(2006.01)}$    $C04B\ 35/48^{(2006.01)}$
$C04B\ 35/488^{(2006.01)}$    $C04B\ 35/495^{(2006.01)}$
$C04B\ 35/626^{(2006.01)}$    $C04B\ 38/00^{(2006.01)}$
$C04B\ 111/28^{(2006.01)}$    $C04B\ 111/40^{(2006.01)}$

(52) Cooperative Patent Classification (CPC):
(C-Sets available)
**C01F 7/023; C01F 7/02; C01F 7/448; C04B 35/111; C04B 35/117; C04B 35/481; C04B 35/4885; C04B 35/495; C04B 35/6261; C04B 38/0074;**
C01P 2002/60; C01P 2004/50; C04B 2111/28; C04B 2111/40; C04B 2235/3217;    (Cont.)

(86) International application number:
**PCT/JP2022/038424**

(87) International publication number:
**WO 2023/068202 (27.04.2023 Gazette 2023/17)**

(54) **BOEHMITE STRUCTURE AND METHOD FOR PRODUCING SAME**

BÖHMITSTRUKTUR UND VERFAHREN ZUR HERSTELLUNG DAVON

STRUCTURE DE BOEHMITE ET PROCÉDÉ POUR LA PRODUCTION DE CELLE-CI

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **19.10.2021 JP 2021170694**

(43) Date of publication of application:
**28.08.2024 Bulletin 2024/35**

(73) Proprietor: **Panasonic Intellectual Property Management Co., Ltd.**
**Osaka-shi, Osaka 540-6207 (JP)**

(72) Inventors:
• **KURIZOE, Naoki**
  **Kadoma-shi, Osaka 571-0057 (JP)**
• **SAWA, Ryosuke**
  **Kadoma-shi, Osaka 571-0057 (JP)**
• **SATO, Natsuki**
  **Kadoma-shi, Osaka 571-0057 (JP)**
• **YOSHIOKA, Tatsuro**
  **Kadoma-shi, Osaka 571-0057 (JP)**
• **SEKINO, Tohru**
  **Suita, Osaka 565-0871 (JP)**
• **GOTO, Tomoyo**
  **Suita, Osaka 565-0871 (JP)**
• **CHO, Sunghun**
  **Suita, Osaka 565-0871 (JP)**

(74) Representative: **Müller-Boré & Partner**
**Patentanwälte PartG mbB**
**Friedenheimer Brücke 21**
**80639 München (DE)**

(56) References cited:
**WO-A1-01/45838          WO-A1-2020/235277**
**WO-A1-2020/235277     JP-A- 2019 199 515**
**JP-A- 2019 199 515      JP-A- 2021 072 188**
**JP-A- 2021 075 416      JP-A- 2021 075 416**

**(Cont. next page)**

(52) Cooperative Patent Classification (CPC): (Cont.)
C04B 2235/3218; C04B 2235/3248;
C04B 2235/3481; C04B 2235/5436;
C04B 2235/5445; C04B 2235/604; C04B 2235/77;
C04B 2235/80; C04B 2235/96

C-Sets
**C04B 38/0074, C04B 35/111, C04B 35/117,
C04B 35/481, C04B 35/495, C04B 35/4885,
C04B 38/007**

**Description**

TECHNICAL FIELD

The present invention relates to a boehmite structure and a method for producing the boehmite structure.

BACKGROUND ART

Boehmite is an aluminum oxide hydroxide represented by a formula of AlOOH. Boehmite is insoluble in water and hardly reacts with acids and alkalis at normal temperature, and thus has high chemical stability and also excellent heat resistance due to its high dehydration temperature of around 500 °C. The powder of boehmite having such properties is used as a resin additive, a catalyst raw material, and an abrasive.

Boehmite has a specific gravity of about 3.07. It is thus awaited to develop a structure that is lightweight and excellent in chemical stability and heat resistance by using boehmite. Patent Literature 1 discloses that a porous boehmite molded body is obtained through hydrothermal treatment of a mixture made from an aluminum hydroxide, a reaction promoter, and water at a temperature of 140 °C to less than 350 °C. In the porous boehmite molded body, plate-like or needle-like boehmite crystals have a continuous crystalline structure and are connected to each other to form continuous pores, and the porous boehmite molded body has a porosity of 65% or more and has a flexural strength (JIS R1601) of 400 N/cm$^2$ or more.

JP 2021 075416 A and WO 2020/235277 A1 disclose methods of pressure heating hydraulic alumina in a solvent containing water, for the production of boehmite structures having a porosity of less than 5%.

CITATION LIST

PATENT LITERATURE

Patent Literature 1: Japanese Unexamined Patent Application Publication No. 2003-238150

SUMMARY OF INVENTION

However, since a sodium or calcium hydroxide is used as a reaction promoter in Patent Literature 1, such a substance remains as impurities in the obtained structure. Thus, it is difficult to obtain a molded body that maintains properties inherent to boehmite in the method of Patent Literature 1. Furthermore, Patent Literature 1 describes that the flexural strength of the molded body obtained is about 1,600 N/cm$^2$ (16 MPa) at the maximum. However, when the molded body is used as a plate member, for example, a higher strength is required.

The present invention has been made in consideration of such an issue as described above, which is inherent in related art. An object of the present invention is to provide a boehmite structure having high strength, and to provide a method for producing the boehmite structure.

In response to the above issue, a boehmite structure according to a first aspect of the present invention includes a plurality of boehmite particles where adjacent boehmite particles are bonded to each other. In the boehmite structure, a boehmite crystallite size is 10 nm or less, and a porosity is 15% or less.

A method for producing a boehmite structure according to a second aspect of the present invention includes a mixing step of obtaining a mixture by mixing mechanochemically treated hydraulic alumina with a solvent including water, and a pressure heating step of pressurizing and heating the mixture under a condition of a pressure of 10 to 600 MPa and a temperature of 50 to 300 °C.

BRIEF DESCRIPTION OF DRAWINGS

[Fig. 1] Fig. 1 is a schematic cross-sectional view of an example of a boehmite structure according to a present embodiment.
[Fig. 2] Fig. 2 is a schematic cross-sectional view of another example of the boehmite structure according to the present embodiment.
[Fig. 3] Fig. 3 is a diagram illustrating the flexural strength and Vickers hardness of test samples of example 1-1 and comparative example 1-1, and the results of observing the surfaces of the test samples using a scanning electron microscope (SEM).
[Fig. 4] Fig. 4 is a graph illustrating X-ray diffraction patterns of test samples of examples 2-1 and 2-2, and comparative example 2-1, and X-ray diffraction patterns of boehmite (AlOOH) and nordstrand (Al(OH)$_3$) registered in ICSD.

[Fig. 5] Fig. 5(a) is a diagram illustrating a reflected electron image at position 1 in test sample 1 of example 3-1. Fig. 5(b) is a diagram illustrating binarized data of the reflected electron image at position 1 in test sample 1 of example 3-1.

[Fig. 6] Fig. 6(a) is a diagram illustrating a reflected electron image at position 2 in test sample 1 of example 3-1. Fig. 6(b) is a diagram illustrating binarized data of the reflected electron image at position 2 in test sample 1 of example 3-1.

[Fig. 7] Fig. 7(a) is a diagram illustrating a reflected electron image at position 3 in test sample 1 of example 3-1. Fig. 7(b) is a diagram illustrating binarized data of the reflected electron image at position 3 in test sample 1 of example 3-1.

[Fig. 8] Fig. 8(a) is a diagram illustrating a reflected electron image at position 1 in test sample 1 of example 3-2. Fig. 8(b) is a diagram illustrating binarized data of the reflected electron image at position 1 in test sample 1 of example 3-2.

[Fig. 9] Fig. 9(a) is a diagram illustrating a reflected electron image at position 2 in test sample 1 of example 3-2. Fig. 9(b) is a diagram illustrating binarized data of the reflected electron image at position 2 in test sample 1 of example 3-2.

[Fig. 10] Fig. 10(a) is a diagram illustrating a reflected electron image at position 3 in test sample 1 of example 3-2. Fig. 10(b) is a diagram illustrating binarized data of the reflected electron image at position 3 in test sample 1 of example 3-2.

[Fig. 11] Fig. 11(a) is a diagram illustrating a reflected electron image at position 1 in test sample 1 of example 3-3. Fig. 11(b) is a diagram illustrating binarized data of the reflected electron image at position 1 in test sample 1 of example 3-3.

[Fig. 12] Fig. 12(a) is a diagram illustrating a reflected electron image at position 2 in test sample 1 of example 3-3. Fig. 12(b) is a diagram illustrating binarized data of the reflected electron image at position 2 in test sample 1 of example 3-3.

[Fig. 13] Fig. 13(a) a diagram illustrating a reflected electron image at position 3 in test sample 1 of example 3-3. Fig. 13(b) is a diagram illustrating binarized data of the reflected electron image at position 3 in test sample 1 of example 3-3.

[Fig. 14] Fig. 14 illustrates photographs of the results of observing particles of hydraulic alumina of example 4-1 and comparative example 4-1 at magnifications of 500 times and 3,000 times.

[Fig. 15] Fig. 15 is a graph illustrating the results of infrared spectroscopic analysis for the hydraulic alumina of example 4-1 and comparative example 4-1.

[Fig. 16] Fig. 16 is a diagram illustrating the flexural strength and Vickers hardness of test samples of example 5-1 and comparative example 5-1, and the results of observing cross sections of the test samples and raw material powders using a scanning electron microscope.

[Fig. 17] Fig. 17 is a diagram illustrating the flexural strength and Vickers hardness of test samples of examples 6-1 and 6-2, and the results of observing cross sections of the test samples using a scanning electron microscope.

[Fig. 18] Fig. 18 is a diagram illustrating the result of observing a cross section of a test sample of example 6-1 using a scanning electron microscope.

DESCRIPTION OF EMBODIMENTS

Referring to the drawings, a description is given below of a boehmite structure according to a present embodiment, and a method for producing the boehmite structure. Note that dimensional ratios in the drawings are exaggerated for convenience of explanation and are sometimes different from actual ratios.

[Boehmite structure according to first embodiment]

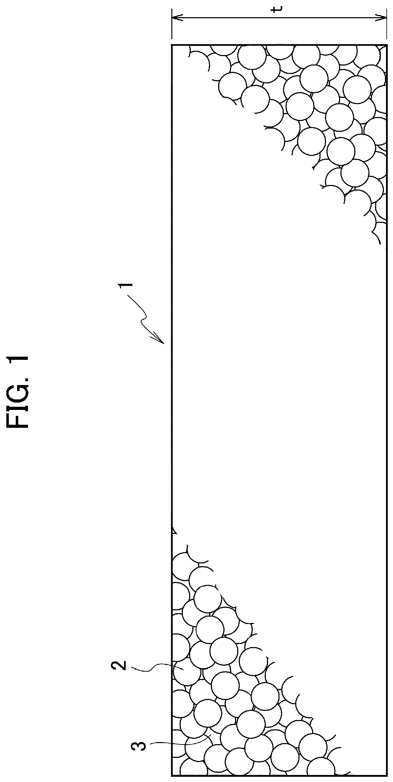

As illustrated in Fig. 1, a boehmite structure 1 according to the present embodiment includes multiple boehmite particles 2. Adjacent boehmite particles 2 are bonded to each other to form the boehmite structure 1 formed by combining boehmite particles 2. Further, there are pores 3 among the adjacent boehmite particles 2.

The boehmite particles 2 may be particles made from only a boehmite phase or may be particles made from a mixed phase of boehmite, and an aluminum oxide or an aluminum hydroxide other than boehmite. For example, the boehmite particles 2 may be particles in which a phase made from boehmite and a phase made from gibbsite (Al(OH)$_3$) are mixed.

The average particle size of the boehmite particles 2 making up the boehmite structure 1 is not particularly limited but is preferably within a range of 300 nm or more and 20 $\mu$m or less, more preferably of 300 nm or more and 10 $\mu$m or less, and particularly preferably of 300 nm or more and 5 $\mu$m or less. When the average particle size of the boehmite particles 2 is within these ranges, a boehmite crystallite included in the boehmite structure 1 become small, which enhances the strength of the boehmite structure 1. When the average particle size of the boehmite particles 2 is within these ranges, the percentage of pores in the boehmite structure 1 is 15% or less, as is described below, and thus it becomes possible to enhance the strength of the boehmite structure 1. Note that in this description, the value of the "average particle size" is, unless otherwise stated, a value calculated as an average value of particle sizes of particles observed in several to several tens of visual fields by using observation means, such as a scanning electron microscope (SEM) or a transmission electron microscope (TEM).

The shape of the boehmite particles 2 is not particularly limited but may be spherical, for example. The boehmite particles 2 may be particles having the shape of a whisker (needle) or particles having the shape of a scale. The whisker-shaped particles or scale-shaped particles have a higher contact with other particles than the spherical particles, and thus it becomes possible to enhance the strength of the entire boehmite structure 1.

As described above, the boehmite structure 1 according to the present embodiment is made from a particle group of boehmite particles 2. That is, the boehmite structure 1 is made from multiple boehmite particles 2 mainly made from boehmite, and the boehmite structure 1 is formed by bonding the boehmite particles 2 to each other. In this case, the boehmite particles 2 may be in point contact with each other, or particle surfaces of the boehmite particles 2 may be in surface contact with each other.

Here, adjacent boehmite particles 2 are bonded through at least one of an oxide or a hydroxide of aluminum. That is, the boehmite particles 2 are not bonded by an organic binder made from an organic compound, and are not bonded by an inorganic binder made from an inorganic compound other than an oxide and a hydroxide of aluminum. That is, as is described below, the boehmite structure 1 is formed by heating a mixture of mechanochemically treated hydraulic alumina and water under pressure. Thus, since the boehmite structure 1 does not include any impurities derived from a reaction promoter, it becomes possible to maintain properties inherent to boehmite.

The boehmite structure 1 has at least a boehmite phase made from boehmite (AlOOH) but may also have another crystalline phase other than the boehmite phase. Examples of another crystalline phase other than the boehmite phase of the boehmite structure 1 include a gibbsite phase made from an aluminum hydroxide ($Al(OH)_3$), and a γ-alumina phase made from an alumina oxide ($Al_2O_3$). However, preferably, the boehmite structure 1 is mainly made from the boehmite phase. As described above, since boehmite is lightweight and has higher chemical stability and heat resistance, mainly using the boehmite phase provides the boehmite structure 1 that is lightweight and excellent in chemical stability and heat resistance.

In the boehmite structure 1 according to the present embodiment, the percentage of presence of the boehmite phase is preferably 50% by mass or more, more preferably 60% by mass or more, and even more preferably 70% by mass or more. Increasing the percentage of the boehmite phase provides the boehmite structure 1 that is lightweight and excellent in chemical stability and heat resistance. Note that the percentage of the boehmite phase in the boehmite structure 1 is determined by measuring an X-ray diffraction pattern of the boehmite structure 1 using an X-ray diffraction method and then performing a Rietveld analysis.

As described above, the boehmite structure 1 may include a gibbsite phase made from an aluminum hydroxide ($Al(OH)_3$) in addition to the boehmite phase. However, since an aluminum hydroxide has reactivity to acids and alkalis, it is preferable to reduce the presence percentage of the gibbsite phase to further increase the chemical stability of the boehmite structure 1. To reduce the presence percentage of the gibbsite phase, the boehmite structure 1 is heated to have the gibbsite phase dehydrated. That is, by heating the boehmite structure 1, a dehydration reaction occurs, which causes the crystalline structure of the gibbsite phase to change to that of the boehmite phase. Consequently, the gibbsite phase decreases and the boehmite phase increases, and thus it becomes possible to enhance the chemical stability of the boehmite structure 1. Note that the heating condition of the boehmite structure 1 is not particularly limited as long as the dehydration reaction of the gibbsite phase occurs, but for example, preferably, the boehmite structure 1 is heated to 300 °C or higher in air.

As a method for reducing the presence percentage of the gibbsite phase in the boehmite structure 1, also preferably, the hydraulic alumina, which is a raw material, is heated to reduce the presence percentage of gibbsite in the hydraulic alumina. Specifically, it is also preferable to use hydraulic alumina having a reduced gibbsite by heating the hydraulic alumina to, for example, 300 °C or higher. By using such hydraulic alumina with reduced gibbsite as a raw material, it also becomes possible to reduce the presence percentage of the gibbsite phase in the boehmite structure 1 and enhance the chemical stability of the boehmite structure 1. Note that the boehmite structure 1 is also formed by heating a mixture of the hydraulic alumina with reduced gibbsite and water under pressure as described below.

In the boehmite structure 1, the boehmite crystallite size is 10 nm or less. As the crystallite size of boehmite included in the boehmite structure 1 becomes smaller, the flexural strength of the obtained boehmite structure 1 improves, and thus it becomes possible to enhance the strength of the boehmite structure 1. Note that in the boehmite structure 1, the boehmite crystallite size is more preferably 8 nm or less, and even more preferably 5 nm or less.

The crystallite size of boehmite included in the boehmite structure 1 can be obtained by measuring the diffraction peak of the boehmite with a powder X-ray diffraction method and then using Scherrer equation with the full width at half maximum and diffraction angle (Bragg angle of the diffraction X-ray) of the diffraction peak. Specifically, after the boehmite structure 1 is ground, the powder X-ray diffraction measurement is performed on the boehmite structure 1. Then, the crystallite size can be obtained from the full width at half maximum and diffraction angle of the diffraction peak of the boehmite in the boehmite structure 1 by using Scherrer equation in equation 1.

[Math. 1]

$$D = K \times \lambda/(\beta \times \cos\theta)$$

D: crystallite size (nm), K: Scherrer constant, $\lambda$: wavelength of the measured X-ray (nm), $\beta$: full width at half maximum (deg), $\theta$: Bragg angle of the X-ray diffraction (deg)

The porosity in the cross section of the boehmite structure 1 is preferably 15% or less. That is, when the cross section of the boehmite structure 1 is observed, the average value of the percentage of pores per unit area is preferably 15% or less. When the porosity is 15% or less, the bonding ratio of boehmite particles 2 increases, and thus the boehmite structure 1 becomes dense and has increased strength. Thus, it becomes possible to improve the durability of the boehmite structure 1. When the porosity is 15% or less, the occurrence of cracks originating from the pores 3 in the boehmite structure 1 is prevented, and thus it becomes possible to increase the flexural strength of the boehmite structure 1. Note that the porosity in the cross section of the boehmite structure 1 is preferably 10% or less, more preferably 5% or less, and even more preferably 3% or less. As the porosity in the cross section of the boehmite structure 1 becomes smaller, the crack originating from the pores 3 is more prevented, and thus it becomes possible to enhance the strength of the boehmite structure 1.

In this description, the porosity is determined as follows. First, the cross section of the boehmite structure 1 is observed, and the boehmite particles 2 and the pores 3 are identified. Then, the unit area and the area of the pores 3 in the unit area are measured to obtain the percentage of the pores 3 per unit area. After the percentage of the pores 3 per unit area is obtained at multiple locations, the average value of the percentage of the pores 3 per unit area is used as the porosity. Note that when observing the cross section of the boehmite structure 1, an optical microscope, a scanning electron microscope (SEM), or a transmission electron microscope (TEM) is usable. The unit area and the area of the pores 3 in the unit area may be measured by binarizing an image observed using the microscope.

The size of each of the pores 3 present inside the boehmite structure 1 is not particularly limited, but preferably, it is as small as possible. The smaller size of the pore 3 prevents cracks originating from the pore 3, and thus it becomes possible to increase the strength of the boehmite structure 1 and improve durability of the boehmite structure 1. Note that the size of the pore 3 in the boehmite structure 1 is preferably 5 $\mu$m or less, more preferably 1 $\mu$m or less, and even more preferably 100 nm or less. The size of the pore 3 present inside the boehmite structure 1 is determined by observing the cross section of the boehmite structure 1 using a microscope in the same manner as the porosity described above.

The boehmite structure 1 only needs to have a structure in which the boehmite particles 2 are bonded to each other, the crystallite size of the boehmite is 10 nm or less, and the porosity is 15% or less. Thus, when the boehmite structure 1 has such a structure, its shape is not particularly limited. The boehmite structure 1 may have the shape of, for example, a plate, a film, a rectangle, a block, a rod, or a sphere. When the boehmite structure 1 has the shape of a plate or a film, a thickness t is not particularly limited but can be, for example, 50 $\mu$m or more. The boehmite structure 1 according to the present embodiment is formed using a pressure heating method as described below. Thus, the boehmite structure 1 having a large thickness is easily obtained. Note that the thickness t of the boehmite structure 1 may be 1 mm or more or may be 1 cm or more. The upper limit of the thickness t of the boehmite structure 1 is not particularly limited but may be, for example, 50 cm.

As described above, the boehmite crystallite size and porosity are within predetermined ranges, and thus the boehmite structure 1 has a high mechanical strength. Thus, the boehmite structure 1 preferably has a flexural strength of 50 MPa or more measured in accordance with Japanese Industrial Standard JIS T6526:2018 (Dental ceramic materials). Note that the flexural strength of the boehmite structure 1 is measured using the biaxial flexure test of JIS T6526. When the flexural strength of the boehmite structure 1 is 50 MPa or more, the boehmite structure 1 is excellent in mechanical strength, and the machinability is enhanced. Thus, it becomes possible to easily use the boehmite structure 1, for example, in a building member requiring high mechanical strength and workability. Note that the flexural strength of the boehmite structure 1 is preferably 80 MPa or more, and more preferably 100 MPa or more. The upper limit of the flexural strength of the boehmite structure 1 is not particularly limited but may be, for example, 300 MPa.

In the boehmite structure 1 according to the present embodiment, multiple boehmite particles 2 are not bonded using an organic binder made from an organic compound and are further not bonded using an inorganic binder made from an inorganic compound other than an oxide and a hydroxide of aluminum. Thus, in metallic elements included in the boehmite structure 1, the content ratio of the elements other than aluminum is preferably 5% by mass or less, more preferably 3% by mass or less, and even more preferably 1% by mass or less. Since the boehmite structure 1 hardly includes impurities, such as sodium or calcium, it becomes possibel to maintain the properties inherent to boehmite.

As described above, the boehmite structure 1 according to the present embodiment includes multiple boehmite particles 2 where adjacent boehmite particles 2 are bonded to each other. The boehmite structure 1 has a boehmite crystallite size of 10 nm or less and a porosity of 15% or less. The boehmite structure 1 according to the present embodiment has a boehmite crystallite size of 10 nm or less and a porosity of 15% or less, and thus the boehmite particles 2 are densely and tightly bonded to each other. Consequently, the boehmite structure 1 has improved mechanical strength and thus can have high durability. Further, in the boehmite structure 1, multiple boehmite particles 2 are bonded without using an organic binder and an inorganic binder made from an inorganic compound other than an oxide and a hydroxide of aluminum. In addition, the boehmite structure 1 mainly includes a boehmite phase. Thus, the boehmite structure 1 is lightweight and has excellent chemical stability.

[Method for producing boehmite structure according to first embodiment]

Next, a method for producing the boehmite structure 1 according to the first embodiment will be described. The boehmite structure 1 can be obtained by mixing mechanochemically treated hydraulic alumina and a solvent including water, and then heating the mixture under pressure. The hydraulic alumina is a hydrate formed by heat treatment of aluminum hydroxide and includes $\rho$-alumina. Such hydraulic alumina has a property of bonding and curing through a hydration reaction. Thus, by using the pressure heating method, the hydration reaction of the hydraulic alumina progresses to bond particles of the hydraulic alumina to each other, and the crystalline structure changes to that of boehmite, so that the boehmite structure 1 can be obtained.

Specifically, first, the powder of hydraulic alumina is subjected to a mechanochemical treatment, and coarse particles of the hydraulic alumina are ground into fine particles. As the hydraulic alumina becomes fine particles, the specific surface area of the hydraulic alumina increases, and the hydration reaction between the hydraulic alumina and a solvent including water is promoted. Further, by performing the mechanochemical treatment on the hydraulic alumina, hydroxy groups on the surface of the hydraulic alumina particles increase, and the reactivity with the solvent increases. Consequently, the hydraulic alumina particles are easily bonded to each other, and thus it becomes possible to obtain the boehmite structure 1 having high strength.

The mechanochemical treatment of the hydraulic alumina powder is not particularly limited as long as the coarse particles of the hydraulic alumina are ground into fine particles. The mechanochemical treatment is preferably a grinding treatment using at least one selected from the group consisting of a ball mill, a bead mill, or a vibration mill. Among them, the mechanochemical treatment is preferably a grinding treatment using a planetary ball mill. The planetary ball mill is a ball mill that grinds hydraulic alumina through the rotational movement of a pot including hydraulic alumina and hard balls (media) and the rotation (orbital movement) of a stage on which the pot is placed. In addition to the collision with the hard balls and the wall of the pot, such a planetary ball mill applies a stronger centrifugal force by rotating and revolving in opposite directions, and thus the grinding treatment at a submicron level can be performed in a short time.

The hard balls (media) used in the mechanochemical treatment are not particularly limited, and hard balls made from ceramic, a resin, or a metal can be used. The pot used in the mechanochemical treatment is also not particularly limited, and a pot made from ceramic, a resin, or a metal can be used. Ceramic hard balls and pot can be made from zirconia, alumina, agate, or silicon nitride. Note that from the viewpoint of efficiently grinding hydraulic alumina, the hard balls and pot are preferably made from ceramic.

The mechanochemical treatment of the hydraulic alumina powder may be a wet treatment, a dry treatment, or a combination of a wet treatment and a dry treatment. However, from the viewpoint of efficiently grinding the hydraulic alumina, the mechanochemical treatment is preferably a wet treatment.

For the solvent used during wet grinding, it is necessary to use a solvent that is difficult to react with hydraulic alumina. That is, when water is used as a solvent for wet grinding, hydraulic alumina and water undergo a hydration reaction during grinding, and fine hydraulic alumina cannot be obtained. Thus, an organic solvent is preferably used as a solvent for wet grinding. Further, an alcohol is preferably used as a solvent for wet grinding, and ethanol is more preferably used. Since ethanol is difficult to react with hydraulic alumina and can be easily removed after grinding, it can be suitably used as a solvent for wet grinding.

The average particle size of the hydraulic alumina powder subjected to the mechanochemical treatment is not particularly limited but is preferably within a range of 0.1 $\mu$m to 5 $\mu$m, and more preferably of 0.5 $\mu$m to 3 $\mu$m. When the particle size of the hydraulic alumina is within these ranges, the hydration reaction between the hydraulic alumina and a solvent including water proceeds more easily, and thus bonding between the hydraulic alumina particles is promoted. Since the crystallite size of boehmite in the boehmite structure 1 is 10 nm or less, it becomes possible to further improve the strength of the boehmite structure 1. Note that as described above, the average particle size of the hydraulic alumina powder can be measured using an observation means such as a scanning electron microscope (SEM) or a transmission electron microscope (TEM).

Next, a mixture is prepared by mixing a powder of mechanochemically treated hydraulic alumina with a solvent including water. Preferably, the solvent including water is pure water or ion-exchanged water. However, the solvent including water may include an acidic substance or an alkaline substance other than water. The solvent including water is only required to be made mainly from water and may include, for example, an organic solvent (for example, alcohol).

Preferably, the amount of the solvent added to the hydraulic alumina is an amount sufficient to proceed the hydration reaction of the hydraulic alumina. The amount of the solvent added is preferably 20% to 200% by mass, and more preferably 50% to 150% by mass, relative to the hydraulic alumina.

Next, the mixture formed by mixing the hydraulic alumina with the solvent including water is filled in a mold. After filling the mixture in the mold, the mold may be heated as necessary. By applying pressure to the mixture inside the mold, the inside of the mold becomes a high pressure state. At this time, the hydraulic alumina becomes highly filled, and the particles of the hydraulic alumina are bonded to each other, resulting in a high density. Specifically, by adding water to the hydraulic alumina, the hydraulic alumina undergoes a hydration reaction to form boehmite and aluminum hydroxide on the surface of the hydraulic alumina particles. By heating and pressurizing the mixture in the mold, the generated boehmite and aluminum hydroxide both diffuse between adjacent hydraulic alumina particles, and the hydraulic alumina particles are gradually bonded to each other. Then, the dehydration reaction proceeds by heating, and the crystalline structure changes from aluminum hydroxide to boehmite. Note that it is supposed that the above-described hydration reaction of hydraulic alumina, interdiffusion between hydraulic alumina particles, and dehydration reaction proceed almost simultaneously.

The molded body is then taken out from the mold to obtain the boehmite structure 1 in which multiple boehmite particles 2 are bonded to each other via at least one of the oxide or the hydroxide of aluminum.

Note that the condition for heating and pressurizing the mixture formed by mixing the hydraulic alumina with the solvent including water is not particularly limited as long as the reaction between the hydraulic alumina and the solvent progresses. For example, preferably, the mixture formed by mixing the hydraulic alumina and the solvent including water is pressurized at a pressure of 10 to 600 MPa while being heated to 50 to 300 °C. Note that the temperature at which the mixture of the hydraulic alumina and the solvent including water is heated is more preferably within a range of 80 to 250 °C, and even more preferably of 100 to 200 °C. The pressure at which the mixture formed by mixing the hydraulic alumina and the solvent including water is pressurized is more preferably within a range of 50 to 600 MPa, and even more preferably of 200 to 600 MPa.

As a method for forming the boehmite structure, a method for pressing only the powder of boehmite is considered. However, even if the powder of boehmite is put into a mold and pressurized at normal temperature, the particles of boehmite are difficult to react with each other, and it is difficult to firmly bond the particles together. Thus, the obtained compact has many pores and thus has insufficient mechanical strength.

As a method for producing an inorganic member made from ceramics, a sintering method has been known. The sintering method is a method for obtaining a sintered body by heating an aggregate of solid powders made from an inorganic substance at a temperature lower than the melting point. Thus, as a method for forming the boehmite structure, a method for pressing only the powder of boehmite to form a compact and then calcining it at 500 °C is also considered. However, when the compact is calcined at 500 °C, the dehydration reaction of boehmite progresses, and the crystalline structure changes from boehmite to $\gamma$-alumina. Since the specific gravity of $\gamma$-alumina is about 3.98, a lightweight structure is not obtained. Even if the compact of boehmite powder is heated at about 500 °C, the boehmite particles are difficult to sinter with each other, so that the obtained structure has many pores and has insufficient mechanical strength.

A further method for forming the boehmite structure is considered to include forming a compact by pressing only the powder of boehmite and then calcining it at 1400 °C. When the compact of boehmite powder is calcined at 1400 °C, the boehmite powders are sintered to form a structure. However, when the compact of boehmite is calcined at 1400 °C, the dehydration reaction of boehmite progresses, and the crystalline structure changes from boehmite to $\alpha$-alumina. Thus, it is not possible to obtain a structure that is dense, lightweight, and excellent in strength because densification is prevented by the occurrence of pores due to dehydration, and further the specific gravity of $\alpha$-alumina is about 3.98. In contrast, in the producing method according to the present embodiment, a mixture formed by mixing hydraulic alumina and a solvent including water is pressurized while being heated, which provides a structure that mainly has a boehmite phase, and is dense, lightweight and excellent in strength.

As described above, the method for producing the boehmite structure 1 according to the present embodiment includes a mixing step of obtaining a mixture by mixing mechanochemically treated hydraulic alumina with a solvent including water, and a pressure heating step of pressurizing and heating the mixture. Preferably, the condition for heating and pressurizing the mixture is a temperature of 50 to 300 °C, and a pressure of 10 to 600 MPa. In the producing method according to the present embodiment, since the boehmite structure 1 is formed under such a low temperature condition, the obtained structure is mainly made from a boehmite phase. Thus, the boehmite structure 1 that is lightweight, excellent in chemical stability, and has a reduced amount of impurities can be obtained using a simple method. Furthermore, since the producing method according to the present embodiment uses mechanochemically treated hydraulic alumina, the crystallite size of boehmite in the boehmite structure 1 can be reduced to 10 nm or less. By using the mechanochemically treated hydraulic alumina, the hydration reaction between the hydraulic alumina and a solvent including water is promoted, and the particles of the hydraulic alumina are easily bonded to each other. Therefore, the boehmite structure 1 having high strength can be obtained.

[Boehmite structure according to second embodiment]

Next, a boehmite structure according to a second embodiment is described in detail. The same components as those in the first embodiment are denoted by the same reference numerals, and redundant description is omitted.

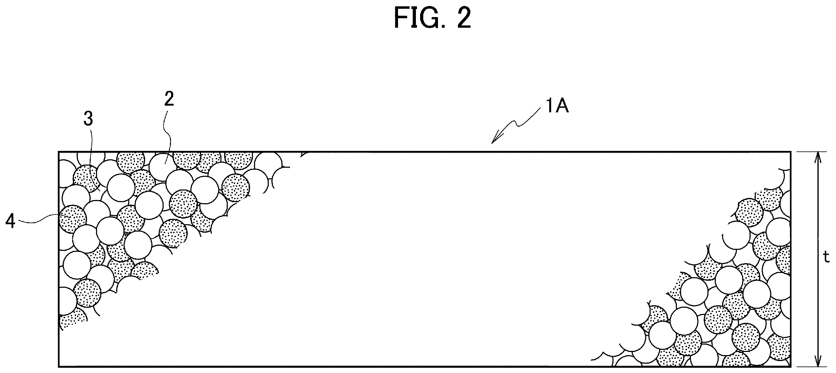

As illustrated in Fig. 2, a boehmite structure 1A according to the second embodiment includes multiple boehmite particles 2, and adjacent boehmite particles 2 are bonded to each other as in the first embodiment. The boehmite structure 1A further includes inorganic oxide particles 4 in addition to the boehmite particles 2, and the inorganic oxide particles 4 are highly dispersed in the boehmite structure 1A. That is, the boehmite structure 1A according to the present embodiment is a molded body that includes multiple boehmite particles 2 and multiple inorganic oxide particles 4 and is formed by bonding at least the boehmite particles 2 to each other. Since the boehmite structure 1A includes inorganic oxide particles 4, the inorganic oxide particles 4 act as an aggregate, and thus it becomes possible to enhance the strength of the boehmite structure 1A.

In the boehmite structure 1A, the average particle size and shape of the boehmite particles 2 can be the same as in the first embodiment. The boehmite structure 1A may include a gibbsite phase including aluminum hydroxide ($Al(OH)_3$) in addition to the boehmite phase, but the percentage of presence of the gibbsite phase is preferably smaller from the viewpoint of enhancing chemical stability.

The boehmite structure 1A preferably has a boehmite crystallite size of 10 nm or less, more preferably 8 nm or less, and even more preferably 5 nm or less. As in the first embodiment, as the crystallite size of the boehmite included in the boehmite structure 1A becomes smaller, it becomes possible to enhance the strength of the obtained boehmite structure 1A.

As in the first embodiment, the boehmite structure 1A has pores 3 in at least one place of among adjacent boehmite particles 2, among adjacent inorganic oxide particles 4, or among boehmite particles 2 and inorganic oxide particles 4. As in the first embodiment, the size of each of the pores 3 in the boehmite structure 1A is preferably 5 $\mu$m or less, more preferably 1 $\mu$m or less, and even more preferably 100 nm or less. Also, as in the first embodiment, the porosity in the cross section of the boehmite structure 1A is preferably 15% or less, more preferably 10% or less, even more preferably 5% or less, and particularly preferably 3% or less.

As described above, the boehmite structure 1A includes the inorganic oxide particles 4 in addition to the boehmite particles 2. The inorganic oxide particles 4 often have multiple hydroxy groups on the surface of the particles. Thus, as described below, when a mixture of hydraulic alumina and inorganic oxide particles is heated under pressure to form the boehmite structure 1A, the boehmite particles 2 and inorganic oxide particles 4 are easily bonded through dehydration condensation. Consequently, since the boehmite particles 2 and inorganic oxide particles 4 are firmly bonded, it becomes possible to enhance the strength of the boehmite structure 1A.

The inorganic oxide particles 4 are made from an oxide of at least one metallic element selected from the group consisting of an alkali metal, an alkaline earth metal, a transition metal, a base metal, and a semimetal. Note that in this description, the alkaline earth metal includes beryllium and magnesium in addition to calcium, strontium, barium, and radium. The base metal includes aluminum, zinc, gallium, cadmium, indium, tin, mercury, thallium, lead, bismuth, and polonium. The semimetal includes boron, silicon, germanium, arsenic, antimony, and tellurium.

As the inorganic oxide particles 4, particles can be used that include at least one selected from the group consisting of alumina ($Al_2O_3$), zirconia ($ZrO_2$), mullite ($3Al_2O_3 \cdot 2SiO_2$), zircon ($ZrSiO_4$), cordierite ($2MgO \cdot 2Al_2O_3 \cdot 5SiO_2$), forsterite ($2MgO \cdot SiO_2$), yttria ($Y_2O_3$), steatite ($MgO \cdot SiO_2$), silica (quartz glass, $SiO_2$), titanium oxide ($TiO_2$), copper oxide ($CuO$), and iron oxide ($Fe_2O_3$).

Note that the boehmite structure 1A may include inorganic carbide particles instead of the inorganic oxide particles 4. The boehmite structure 1A may include inorganic carbide particles in addition to the inorganic oxide particles 4. Since inorganic carbide particles also act as an aggregate, it becomes possible to enhance the strength of the boehmite structure 1A by including the inorganic carbide particles. Note that as the inorganic carbide particles, particles made from a carbide of at least one metallic element selected from the group consisting of an alkali metal, alkaline earth metal, transition metal, base metal, and metalloid can be used. As the inorganic carbide particles, particles made from silicon carbide ($SiC$) can also be used.

The inorganic oxide particles 4 preferably include silicon. The inorganic oxide particles 4 preferably include silica ($SiO_2$). When the inorganic oxide particles 4 include a silica component, hydroxy groups are easily formed on the surface of the particles. Consequently, the boehmite particles 2 and the inorganic oxide particles 4 are easily bonded through dehydration condensation, and thus it becomes possible to further enhance the strength of the boehmite structure 1A. Note that the inorganic oxide particles including silica are preferably particles made from at least one selected from the group consisting of mullite ($3Al_2O_3 \cdot 2SiO_2$), zircon ($ZrSiO_4$), cordierite ($2MgO \cdot 2Al_2O_3 \cdot 5SiO_2$), forsterite ($2MgO \cdot SiO_2$), steatite ($MgO \cdot SiO_2$), and quartz glass ($SiO_2$).

In the boehmite structure 1A, the average particle size of the inorganic oxide particles 4 is preferably 5 $\mu$m or less. The smaller the particle size of the inorganic oxide particles 4, the greater the specific surface area, which can increase the contact parts between the boehmite particles 2 and the inorganic oxide particles 4 and thus can increase the adhering parts. Consequently, it becomes possible to enhance the strength of the boehmite structure 1A. Note that the average particle size of the inorganic oxide particles 4 is more preferably 3 $\mu$m or less, and even more preferably 1 $\mu$m or less. As described above, the average particle size of the inorganic oxide particles 4 can be measured using an observation means such as a scanning electron microscope (SEM) or a transmission electron microscope (TEM).

In the boehmite structure 1A, the average particle size of the inorganic oxide particles 4 may be within a range of 0.1 mm to 10 cm. It becomes possible to enhance the hardness of the boehmite structure 1A by adding, to the boehmite structure 1A, inorganic oxide particles 4 having a relatively large particle size. That is, by including the inorganic oxide particles 4 having a high hardness and a large particle size, it becomes possible, due to the inorganic oxide particles 4, to enhance the hardness of the boehmite structure 1A itself.

The inorganic oxide particles 4 preferably have Vickers hardness of 10 GPa or less from the viewpoint of filling properties. As will be described below, the boehmite structure 1A can be produced by mixing mechanochemically treated hydraulic alumina particles and inorganic oxide particles with a solvent including water, and then heating the mixture under pressure. Here, if the Vickers hardness of inorganic oxide particles is small, when the mixture of hydraulic alumina particles, inorganic oxide particles, and solvent is pressurized, the inorganic oxide particles are crushed by pressure in the mixture. Consequently, the crushed inorganic oxide particles enter gaps in the mixture, and thus the hydraulic alumina and the inorganic oxide particles come into closest packing. Then, the boehmite structure 1A having high strength can be obtained through the fixation of the hydraulic alumina and inorganic oxide particles which are in closest packing. Note that for the Vickers hardness of the inorganic oxide particles 4, a value is adopted that is measured for the material making up the inorganic oxide particles 4 according to JIS R1610 (Test methods for hardness of fine ceramics).

The inorganic oxide particles 4 preferably have an elastic modulus (Young's modulus) of 320 GPa or less. If the elastic modulus of the inorganic oxide particles 4 is small, when the mixture of the hydraulic alumina particles, inorganic oxide particles 4, and solvent is pressurized, the inorganic oxide particles 4 can bend in the mixture. Thus, when the pressure reduction operation is performed after the hydraulic alumina and the inorganic oxide particles 4 are fixed through the heating and pressurization process to form the boehmite structure 1A, the inorganic oxide particles can maintain the original shape inside the boehmite structure 1A. Consequently, peeling at the interface between particles can be prevented, and thus it becomes possible to maintain the high strength of the boehmite structure 1A. Note that for the elastic modulus (Young's modulus) of the inorganic oxide particles 4, a value is adopted that is measured for the material making up the inorganic oxide particles 4 according to JIS R1602 (Testing methods for elastic modulus of fine ceramics).

Note that Table 1 illustrates representative values of Vickers hardness of alumina, zirconia, mullite, zircon, cordierite, forsterite, and silica (quartz glass) which can be constituent materials of the inorganic oxide particles 4. Table 1 also illustrates representative values of the flexural strength, coefficient of thermal expansion, and specific gravity of these inorganic oxides. Table 1 also illustrates representative values of the Vickers hardness, flexural strength, coefficient of thermal expansion, and specific gravity of boehmite.

[Table 1]

|  | JIS standard | Boehmite | Alumina | Zirconia | Mullite | Zircon | Cordierite | Forsterite | Quartz glass |
|---|---|---|---|---|---|---|---|---|---|
|  |  | AlOOH | $Al_2O_3$ | $ZrO_2$ | $3Al_2O_3 \cdot 2SiO2$ | $ZrSiO_4$ | $2MgO \cdot 2Al_2O_3 \cdot 5SiO_2$ | $2MgO \cdot SiO_2$ | $SiO_2$ |
| Hardness of sintered body (Vickers hardness) (GPa) | R1610 | 1.5 | 13 | 12 | 9.8 | 8 | 7 | 8 | 8.6-9.8 |
| Strength of sintered body (flexural strength) (MPa) | R1601 | 50 | 1200 | 1200 | 180 | 100 | 100 | 150 | 67-69 |
| Coefficient of thermal expansion ($10^{-6}$/°C) | R1618 | 7-11 | 8.2 | 9.1 | 5.3 | 3.2 | 2.8 | 9.7 | 0.51-0.58 |
| Specific gravity | R1634 | 3 | 3.9 | 6 | 2.7 | 3.2 | 2.2 | 3.2 | 2.2 |

Table 2 illustrates representative values of elastic moduli (Young's moduli) of alumina, mullite, zirconia, yttria, forsterite, cordierite, steatite, and silica.

[Table 2]

|  | Chemical formula | Elastic modulus (Young's modulus) (GPa) |
| --- | --- | --- |
| Alumina | $Al_2O_3$ | 360 |
| Mullite | $3Al_2O_3 \cdot 2SiO2$ | 210 |
| Zirconia | $ZrO_2$ | 200 |
| Yttria | $Y_2O_3$ | 160 |
| Forsterite | $2MgO \cdot SiO_2$ | 150 |
| Cordierite | $2MgO \cdot 2Al_2O_3 \cdot 5SiO_2$ | 140 |
| Steatite | $MgO \cdot SiO_2$ | 120 |
| Quarts glass | $SiO_2$ | 72-74 |

In the boehmite structure 1A, the boehmite phase is preferably an indefinite shape crystal. That is, when the cross section of the boehmite structure 1A is observed using a microscope, it is preferable that the boehmite phase have many irregularities on the surface and the shape of the boehmite phase be not constant. In addition, the boehmite phase preferably does not have a faceted surface, that is, a flat surface on the surface. Since the boehmite phase is an indefinite shape crystal, the contact area between the boehmite particles 2 (boehmite phase) and the inorganic oxide particles 4 increases, and thus the bonding force therebetween can be enhanced.

Note that in the boehmite structure 1A, the inorganic oxide particles 4 may have a particle shape and may further have a faceted surface, that is, a flat surface, on the particle surface. When the inorganic oxide particles 4 are spherical particles having faceted surfaces, the dispersibility of the inorganic oxide particles 4 is enhanced during molding, and thus the inorganic oxide particles 4 can be dispersed almost uniformly in the boehmite structure 1A. Consequently, it becomes possible to prevent the discrepancies of the strength and hardness of the boehmite structure 1A. Furthermore, when the inorganic oxide particles 4 have faceted surfaces, there is a possibility that a pinning effect to suppress crystal growth of hydraulic alumina is exerted during molding of the boehmite structure 1A. Consequently, it becomes possible to prevent the cracking of the boehmite particles 2 and further enhance the strength of the boehmite structure 1A.

In the boehmite structure 1A, the inorganic oxide particles 4 may have a particle shape and may further have an indefinite shape without faceted surfaces. When the inorganic oxide particles 4 are indefinite shape particles, points of entanglement with the indefinite shape boehmite particles 2 increase. Consequently, the shear strength between the inorganic oxide particles 4 and the boehmite particles 2 increases, and thus it becomes possible to further improve the strength of the entire boehmite structure 1A.

In the boehmite structure 1A, the content ratio of the boehmite particles 2 and the inorganic oxide particles 4 is not particularly limited. That is, in the boehmite structure 1A, when the characteristics of boehmite is to be increased, it is necessary to decrease the content ratio of the inorganic oxide particles 4. For example, when the strength of the boehmite structure 1A is to be further increased, the content ratio of the inorganic oxide particles 4 may be increased. Thus, in the boehmite structure 1A, the volume percentage of the inorganic oxide particles 4 can be within a range of 10% to 90% by volume, of 20% to 70% by volume, or of 25% to 60% by volume.

As in the first embodiment, the boehmite structure 1A can have, for example, a plate shape, film shape, rectangular shape, block shape, rod shape, or spherical shape. In the case where the boehmite structure 1A has a plate shape or film shape, thickness t of the boehmite structure 1A is not particularly limited but can be, for example, 50 $\mu$m or more. Note that the thickness t of the boehmite structure 1A may be 1 mm or more, or may be 1 cm or more. The upper limit of the thickness t of the boehmite structure 1A is not particularly limited but can be, for example, 50 cm.

As described above, multiple boehmite particles 2 are firmly bonded to each other and the boehmite crystallite size is 10 nm or less, and thus the boehmite structure 1A has a high mechanical strength. Hence, the boehmite structure 1A also preferably has a flexural strength of 50 MPa or more measured in accordance with JIS T6526:2018. Note that the flexural strength of the boehmite structure 1A is more preferably 80 MPa or more, and even more preferably 100 MPa or more. Although the upper limit of the flexural strength of the boehmite structure 1A is not particularly limited, it can be, for example, 300 MPa.

As described above, the boehmite structure 1A according to the present embodiment includes multiple boehmite particles 2 and multiple inorganic oxide particles 4, and adjacent boehmite particles 2 are bonded to each other. The boehmite structure 1A has a boehmite crystallite size of 10 nm or less and a porosity of 15% or less. In the boehmite structure 1A of the present embodiment, the boehmite crystallite size is 10 nm or less and the porosity is 15% or less, and thus the boehmite particles 2 and the inorganic oxide particles 4 are densely and tightly fixed. Consequently, the boehmite structure 1A has improved mechanical strength and thus can have high durability. Further, in the boehmite structure 1A, the inorganic oxide particles 4 as an aggregate are dispersed, and thus it becomes possible to enhance the strength.

[Method for producing boehmite structure according to second embodiment]

Next, a method for producing a boehmite structure 1A according to the second embodiment will be described. The boehmite structure 1A can be obtained by using a pressure heating method as in the first embodiment. That is, the boehmite structure 1A can be obtained by mixing mechanochemically treated hydraulic alumina and inorganic oxide particles with a solvent including water, and then heating the mixture under pressure. By using such a pressure heating method, the hydration reaction of hydraulic alumina proceeds in a state where the hydraulic alumina and inorganic oxide particles are mixed. Then, while the hydraulic alumina bonds with each other, the crystalline structure changes to boehmite. Consequently, the boehmite structure 1A can be obtained which includes the boehmite particles 2 and the inorganic oxide particles 4 and in which adjacent boehmite particles 2 are bonded to each other.

Specifically, first, the powder of hydraulic alumina is subjected to a mechanochemical treatment. The mechanochemical treatment of the hydraulic alumina can be performed in the same manner as in the first embodiment. Note that although the average particle size of the hydraulic alumina powder subjected to the mechanochemical treatment is not particularly limited, it is preferably within a range of 0.1 $\mu$m to 5 $\mu$m, and more preferably of 0.5 $\mu$m to 3 $\mu$m.

Next, the powder of inorganic oxide particles is subjected to the mechanochemical treatment. The mechanochemical treatment of the inorganic oxide particles can be performed in the same manner as the mechanochemical treatment of the hydraulic alumina. That is, the mechanochemical treatment is preferably a grinding treatment using at least one selected from the group consisting of a ball mill, a bead mill, or a vibration mill. Among them, the mechanochemical treatment is preferably a grinding treatment using a planetary ball mill. The mechanochemical treatment of the powder of inorganic oxide particles may be a wet treatment, a dry treatment, or a combination of a wet treatment and a dry treatment. Note that when the inorganic oxide particles are difficult to react with water, water may be used as a solvent for wet grinding.

Although the average particle size of the powder of inorganic oxide particles subjected to the mechanochemical treatment is not particularly limited, it is preferably within a range of 0.1 $\mu$m to 5 $\mu$m, and more preferably of 0.5 $\mu$m to 3 $\mu$m. Since the average particle sizes of the inorganic oxide particles and hydraulic alumina subjected to the mechanochemical treatment are equivalent, the inorganic oxide particles and the hydraulic alumina are easily mixed uniformly. Thus, it becomes possible to promote adhesion between the inorganic oxide particles and the hydraulic alumina and enhance the strength of the boehmite structure 1A. Note that the average particle size of the powder of the inorganic oxide particles can be measured using an observation means such as a scanning electron microscope (SEM) or a transmission electron microscope (TEM).

The mechanochemical treatment of the hydraulic alumina and the mechanochemical treatment of the inorganic oxide particles may be performed separately or together. That is, after the mechanochemical treatment is performed separately on the hydraulic alumina and the inorganic oxide particles, they may be mixed. Further, after the hydraulic alumina and inorganic oxide particles are put into one pot, they may be subjected to the mechanochemical treatment together. However, since it is preferable to mix the hydraulic alumina and inorganic oxide particles uniformly, it is preferable to perform the mechanochemical treatment on them together.

Next, the mechanochemically treated hydraulic alumina powder and inorganic oxide particle powder are mixed with a solvent including water to prepare a mixture. The solvent including water is preferably pure water or ion-exchanged water. In addition to water, the solvent including water may include an acidic substance or an alkaline substance, or may include an organic solvent.

The amount of the solvent added to the mixture of the hydraulic alumina and inorganic oxide particles is preferably an amount sufficient to proceed the hydration reaction of the hydraulic alumina. The amount of the solvent added is, relative to the hydraulic alumina, preferably within a range of 20% to 200% by mass, and more preferably of 50% to 150% by mass.

Then, the mixture obtained by mixing the hydraulic alumina and inorganic oxide particles with the solvent including water is filled into a mold. After the mixture is filled into the mold, the mold may be heated as necessary. By applying pressure to the mixture inside the mold, the inside of the mold becomes a high pressure state. At this time, the hydraulic alumina and inorganic oxide particles become highly filled, and the hydraulic alumina particles are bonded to each other. Then, the dehydration reaction proceeds through heating, and the boehmite particles 2 are bonded to each other. When hydroxy groups are present on the surface of the inorganic oxide particles, the dehydration condensation reaction with the boehmite particles 2 proceeds, and thus the boehmite particles 2 and the inorganic oxide particles 4 are bonded to each other.

The molded body is then taken out from the mold to obtain the boehmite structure 1A in which the boehmite particles 2 are bonded to each other and further the inorganic oxide particles 4 are dispersed.

The condition for heating and pressurizing the mixture obtained by mixing the hydraulic alumina and inorganic oxide particles with the solvent including water are preferably pressurizing at a pressure of 10 to 600 MPa while heating to 50 to 300 °C, as in the first embodiment. Note that the temperature at which the mixture is heated is more preferably within a range of 80 to 250 °C and more preferably of 100 to 200 °C. The pressure at which the mixture is pressurized is more preferably within a range of 50 to 600 MPa and more preferably of 200 to 600 MPa.

As described above, the producing method of the boehmite structure 1A according to the present embodiment includes a mixing step of obtaining a mixture by mixing mechanochemically treated hydraulic alumina and inorganic oxide particles with a solvent including water, and a pressure heating step of pressurizing and heating the mixture. The condition for heating and pressurizing the mixture is preferably a temperature of 50 to 300 °C and a pressure of 10 to 600 MPa. In the producing method according to the present embodiment, the mechanochemically treated hydraulic alumina and inorganic oxide particles are used. Thus, while the crystallite size of boehmite in the boehmite structure 1A is set to 10 nm or less, in addition, the inorganic oxide particles acting as an aggregate can be highly dispersed. Therefore, the boehmite structure 1A having high strength can be obtained.

EXAMPLES

The present embodiment will be described in more detail below with examples and comparative examples, but the present embodiment is not limited to these examples.

[Example 1]

(Preparation of test samples)

<Example 1-1>

First, as hydraulic alumina, hydraulic alumina BK-112 manufactured by SUMITOMO CHEMICAL COMPANY, LIMITED was prepared. Note that the hydraulic alumina has a central particle size of 16 $\mu$m. The hydraulic alumina powder was analyzed using a powder X-ray diffraction method and was found to be a mixture of boehmite and gibbsite (aluminum hydroxide). The hydraulic alumina also included $\rho$ alumina.

Next, the hydraulic alumina was subjected to the mechanochemical treatment using a planetary ball mill. Specifically, first, the hydraulic alumina, ethanol as a solvent, and hard balls (media) were put into a resin pot. Note that the pot used was made from polyamide and had a volume of 250 mL. The media used were made from zirconia and had a diameter of $\Phi$3mm.

Then, the hydraulic alumina was ground by treating, with a planetary ball mill, the pot including the hydraulic alumina, solvent, and hard balls. Note that the planetary ball mill used was a planetary ball-type mill, Classic Line P-5, manufactured by Fritsch Japan Co., Ltd. The rotation speed of the pot was set to 200 rpm, and the treatment time was set to 3 hours. Then, the mixture of the hydraulic alumina and solvent was taken out from the pot, and the solvent was removed to obtain mechanochemically treated hydraulic alumina.

Next, after ion-exchanged water was weighed to be 80% by mass relative to the mechanochemically treated hydraulic alumina, the hydraulic alumina and the ion-exchanged water were mixed by using an agate mortar and pestle to obtain a mixture. Then, the mixture obtained was put in a cylindrical molding die ($\Phi$10) having an internal space. The mixture was then heated and pressurized under a condition of 400 MPa, 180 °C, and 20 minutes to obtain a test sample 1 of example 1-1.

<Comparative example 1-1>

First, as hydraulic alumina, hydraulic alumina BK-112 manufactured by SUMITOMO CHEMICAL COMPANY, LIMITED was prepared. After ion-exchanged water was weighed to be 80% by mass relative to the same hydraulic alumina, the hydraulic alumina and the ion-exchanged water were mixed using an agate mortar and pestle to obtain a mixture. Next, the mixture obtained was put into a cylindrical molding die ($\Phi$10) having an internal space. The mixture was heated and pressurized under a condition of 400 MPa, 180 °C, and 20 minutes to obtain a test sample of comparative example 1-1. That is, the test sample of comparative example 1-1 is a sample in which no mechanochemical treatment has been performed on the hydraulic alumina.

(Measurement of flexural strength)

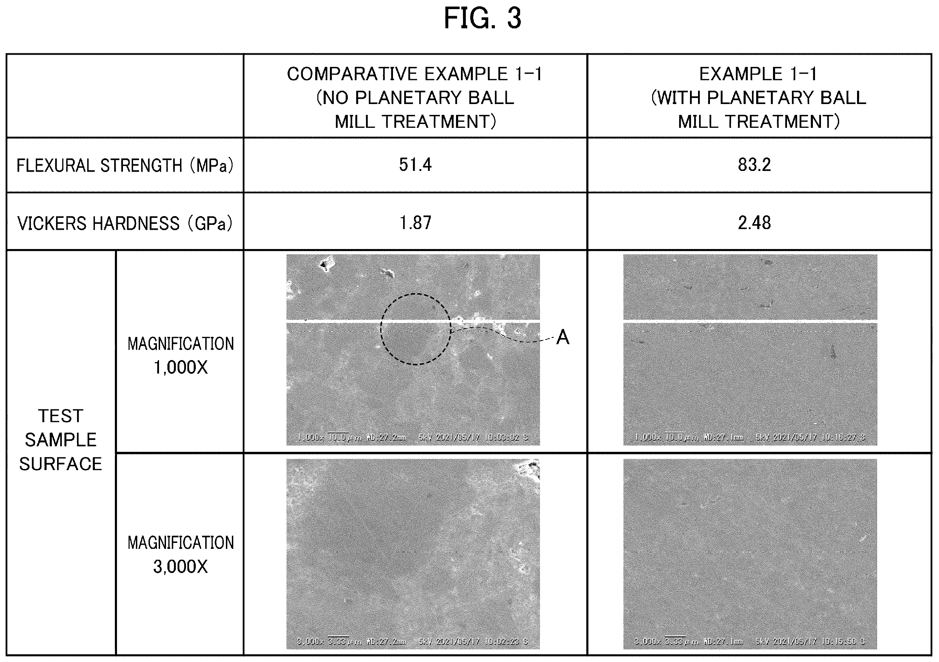

Flexural strength was measured in accordance with JIS T6526 for the test samples of example 1-1 and comparative example 1-1. Consequently, as illustrated in Fig. 3, the flexural strength (the maximum value of stress) of the test sample of example 1-1 was 83.2 MPa. In contrast, the flexural strength of the test sample of comparative example 1-1 was 51.4 MPa.

(Vickers hardness measurement)

Vickers hardness was measured in accordance with JIS R1610 for the test samples of example 1-1 and comparative example 1-1. As illustrated in Fig. 3, the Vickers hardness of the test sample of example 1-1 was 2.48 GPa. In contrast, the Vickers hardness of the test sample of comparative example 1-1 was 1.87 GPa.

(Microscope observation)

Surface observations were performed on the test samples of example 1-1 and comparative example 1-1 using a scanning electron microscope. Consequently, as illustrated in Fig. 3, it is evident that many coarse particles are present in the test sample of comparative example 1-1, as indicated by a reference sign A. In contrast, it is evident that no coarse particles are present in the test sample of example 1-1. That is, it is evident that particles are finer and more uniform in the test sample of example 1-1 than in comparative example 1-1.

[Example 2]

(Preparation of test samples)

<Example 2-1>

First, as hydraulic alumina, hydraulic alumina BK-112 manufactured by SUMITOMO CHEMICAL COMPANY, LIMITED was prepared. Next, the hydraulic alumina was subjected to mechanochemical treatment using a planetary ball mill. Specifically, first, the hydraulic alumina, ethanol as a solvent, and hard balls (media) were put into a resin pot. Note that the pot used was made from polyamide and had a volume of 250 mL. The media used were made from zirconia and had a diameter of $\Phi 3mm$.

Then, the hydraulic alumina was ground by treating, with a planetary ball mill, the pot including the hydraulic alumina, solvent, and hard balls. Note that the planetary ball mill was the same as that of example 1-1. The rotation speed of the pot was set to 200 rpm, and the treatment time was set to 1 hour. Then, the mixture of the hydraulic alumina and solvent was taken out from the pot, and the solvent was removed to obtain mechanochemically treated hydraulic alumina.

Next, after ion-exchanged water was weighed to be 80% by mass relative to the mechanochemically treated hydraulic alumina, the hydraulic alumina and the ion-exchanged water were mixed using an agate mortar and pestle to obtain a mixture. Next, the mixture obtained was put into a cylindrical molding die ($\Phi 10$) having an internal space. The mixture was then heated and pressurized under a condition of 400 MPa, 180 °C, and 20 minutes to obtain a test sample of example 2-1.

<Example 2-2>

In the planetary ball mill treatment, a test sample of example 2-2 was obtained in the same manner as in example 2-1 except that a zirconia pot was used as the pot and the treatment time was set to 3 hours.

<Comparative example 2-1>

A test sample prepared in the same manner as in comparative example 1-1 was used as the test sample of comparative example 2-1.

(Measurement of crystallite size)

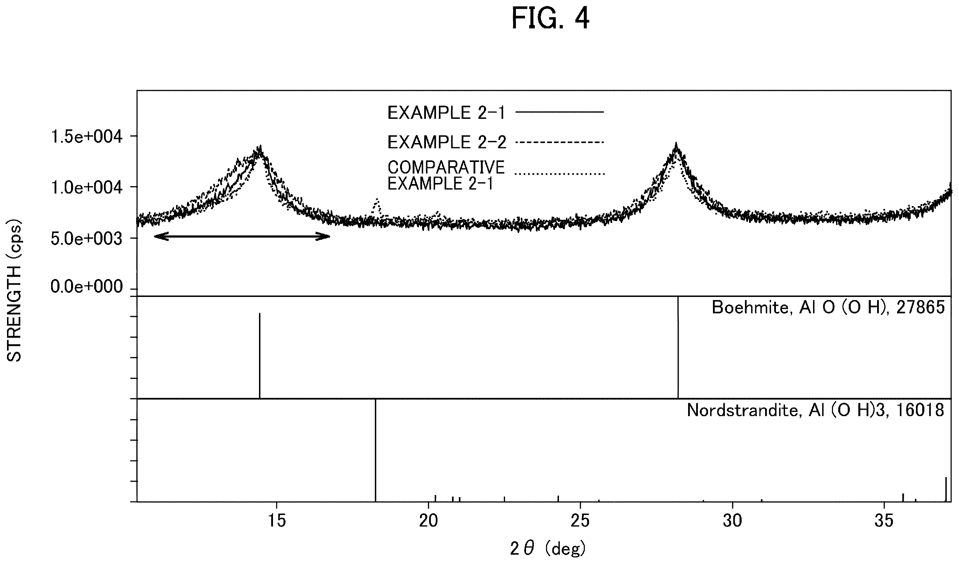

Powder X-ray diffraction measurements were performed on the test samples of examples 2-1 and 2-2 and comparative example 2-1 using an X-ray diffraction apparatus to determine the crystallite size. Specifically, powder X-ray diffraction measurements using Cu-K$\alpha$ radiation were performed after each test sample was ground. Then, the crystallite size was determined from the full width at half maximum and diffraction angle of the diffraction peak of boehmite in each test sample by using Scherrer equation in equation 1. Fig. 4 illustrates X-ray diffraction patterns of test samples. Fig. 4 also illustrates X-ray diffraction patterns of boehmite (AlOOH) and nordstrand (Al (OH)$_3$) registered in ICSD.

The crystallite size of each test sample was determined from the full width at half maximum and the diffraction angle at the diffraction peak around the diffraction angle $2\theta=14.5°$ in Fig. 4. Consequently, the crystallite size of boehmite in the test sample of example 2-1 using the resin pot was 6.8 nm. The crystallite size of boehmite in the test sample of example 2-2 using the ceramic pot was 3.4 nm. In contrast, the crystallite size of boehmite in the test sample of comparative example 2-1 without mechanochemical treatment was 10.3 nm.

[Example 3]

(Preparation of test samples)

<Example 3-1>

First, as hydraulic alumina, hydraulic alumina BK-112 manufactured by SUMITOMO CHEMICAL COMPANY, LIMITED was prepared. Next, the hydraulic alumina was subjected to mechanochemical treatment using a planetary ball mill. Specifically, first, the hydraulic alumina, ethanol as a solvent, and hard balls (media) were put into a zirconia pot. Note that the pot used had a volume of 250 mL. The media used were made from zirconia and had a diameter of Φ3mm.

Then, the hydraulic alumina was ground by treating, with a planetary ball mill, the pot including the hydraulic alumina, solvent, and hard balls. Note that the planetary ball mill was the same as that of example 1-1. The rotation speed of the pot was set to 250 rpm, and the treatment time was set to 3 hours. Then, the mixture of the hydraulic alumina and solvent was taken out from the pot, and the solvent was removed to obtain the mechanochemically treated hydraulic alumina.

Next, after ion-exchanged water was weighed to be 80% by mass relative to the mechanochemically treated hydraulic alumina, the hydraulic alumina and the ion-exchanged water were mixed using an agate mortar and pestle to obtain a mixture. Next, the mixture obtained was put into a cylindrical molding die (Φ10) having an internal space. The mixture was then heated and pressurized under a condition of 400 MPa, 180 °C, and 20 minutes to obtain a test sample of example 3-1.

<Example 3-2>

In the planetary ball mill treatment, a test sample of example 3-2 was obtained in the same manner as in example 3-1 except that a polyamide pot was used as the pot, the rotation speed of the pot was set to 200 rpm, and the treatment time was set to 3 hours.

<Example 3-3>

In the planetary ball mill treatment, a test sample of example 3-3 was obtained in the same manner as in example 3-1 except that a polyamide pot was used as the pot, the rotation speed of the pot was set to 200 rpm, and the treatment time was set to 1 hour.

Table 3 collectively illustrates pot materials, pot rotation speeds in planetary ball mills, and treatment times of the planetary ball mills in examples 3-1 to 3-3.

[Table 3]

| | Grinding conditions | | | Porosity (%) | | | |
|---|---|---|---|---|---|---|---|
| | Pot material | Rotation speed | Treatment time | Position 1 | Position 2 | Position 3 | Average value |
| Example 3-1 | Zirconia | 250rpm | 3 hrs. | 0.255 | 0.585 | 0.249 | 0.36 |
| Example 3-2 | Polyamide | 200rpm | 3 hrs. | 0.629 | 0.225 | 0.379 | 0.41 |
| Example 3-3 | Polyamide | 200rpm | 1 hr | 0.618 | 0.964 | 0.621 | 0.73 |

(Porosity measurement)

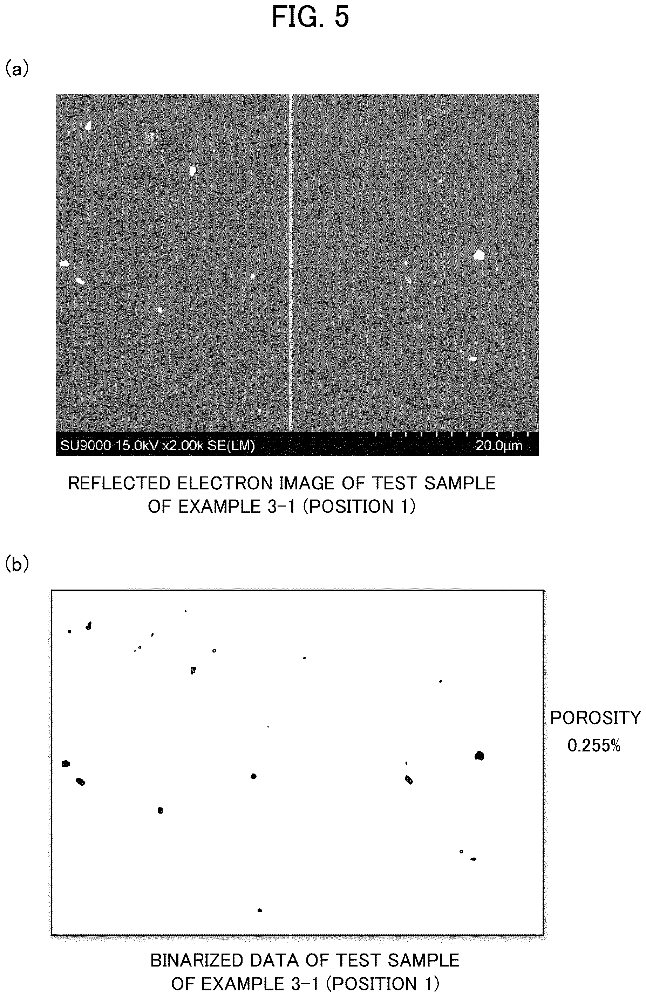

First, a cross section polisher processing (CP processing) was applied to a cross section of a test sample of example 3-1, which is cylindrical. Next, using a scanning electron microscope (SEM), a reflected electron image was observed at a magnification of 2,000 times on the cross section of the test sample. The reflected electron images obtained by observing three points (positions 1 to 3) in the cross section of the test sample are illustrated in Figs. 5(a), 6(a), and 7(a). In the observed reflected electron images, gray particles are boehmite particles 2 and white portions are pores 3.

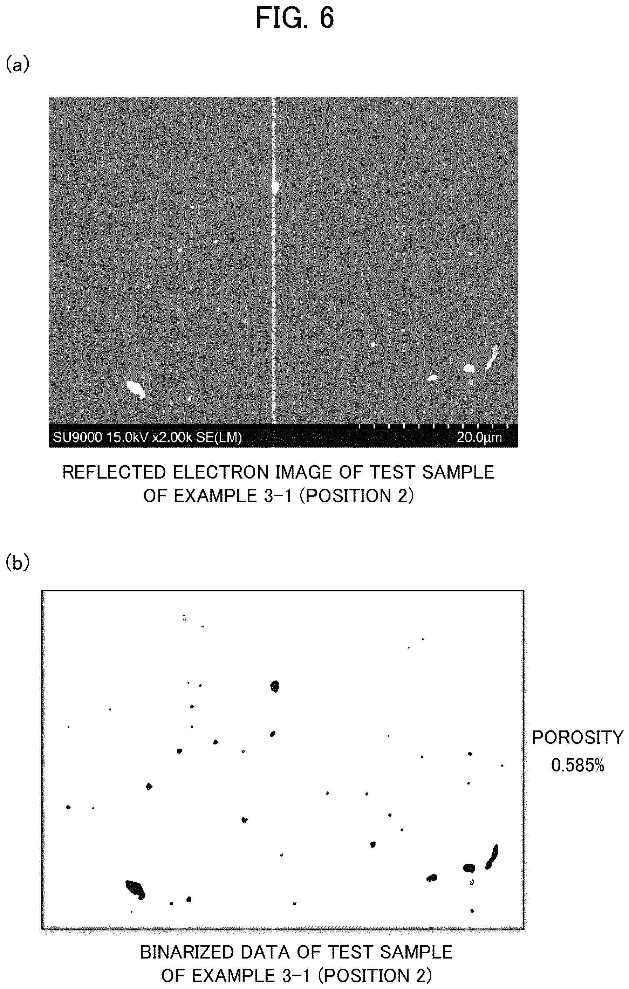

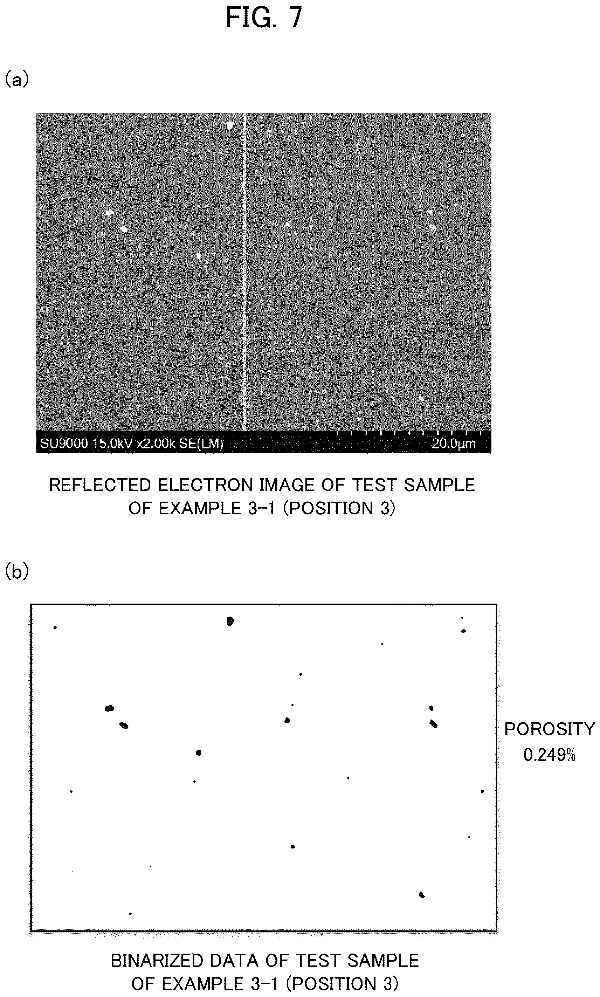

Next, the SEM images of the three fields were binarized to clarify the pore portions. The binarized images of the reflected electron images of Figs. 5(a), 6(a), and 7(a) are illustrated in Figs. 5(b), 6(b), and 7(b), respectively. Then, the area percentage of the pore portion was calculated from the binarized image, and the average value was used as the porosity. Specifically, from Fig. 5(b), the area percentage of the pore portion at position 1 was 0.255%. From Fig. 6(b), the area percentage of the pore portion at position 2 was 0.585%. From Fig. 7(b), the area percentage of the pore portion at position 3 was 0.249%. Thus, the porosity of the test sample of example 3-1 was 0.36%, which is the average value of the area percentage of the pore portion at positions 1 to 3.

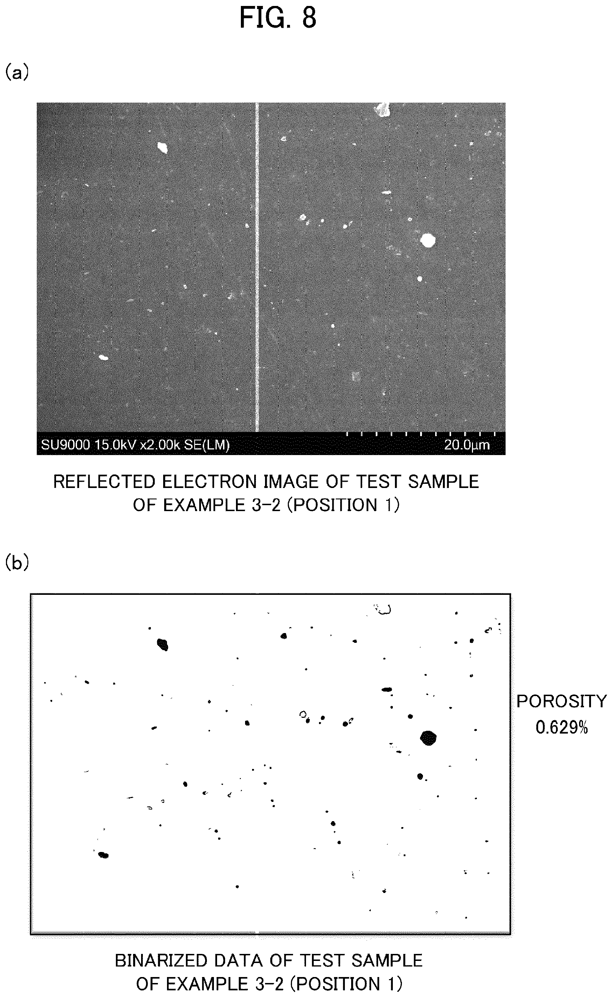

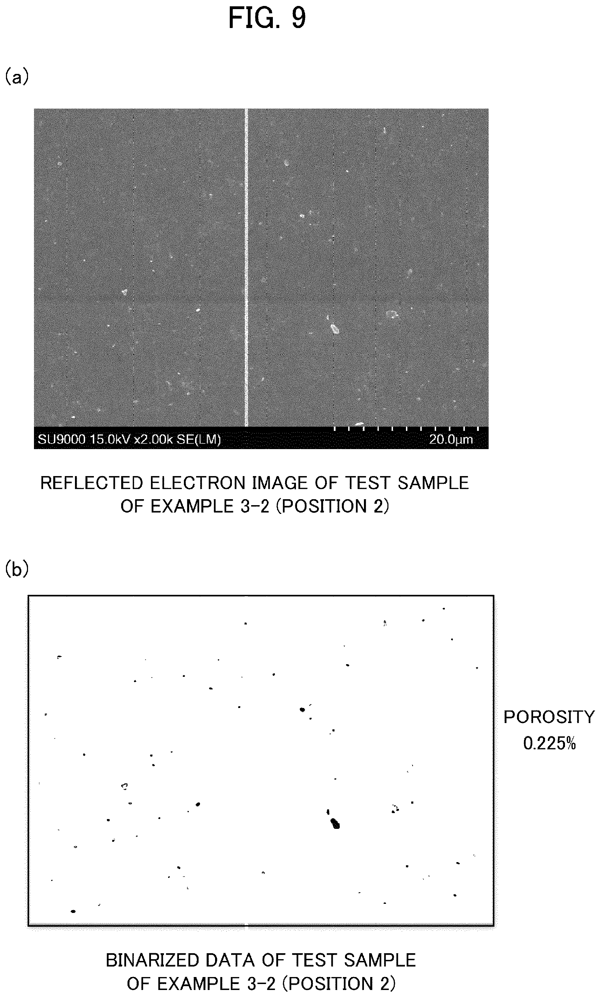

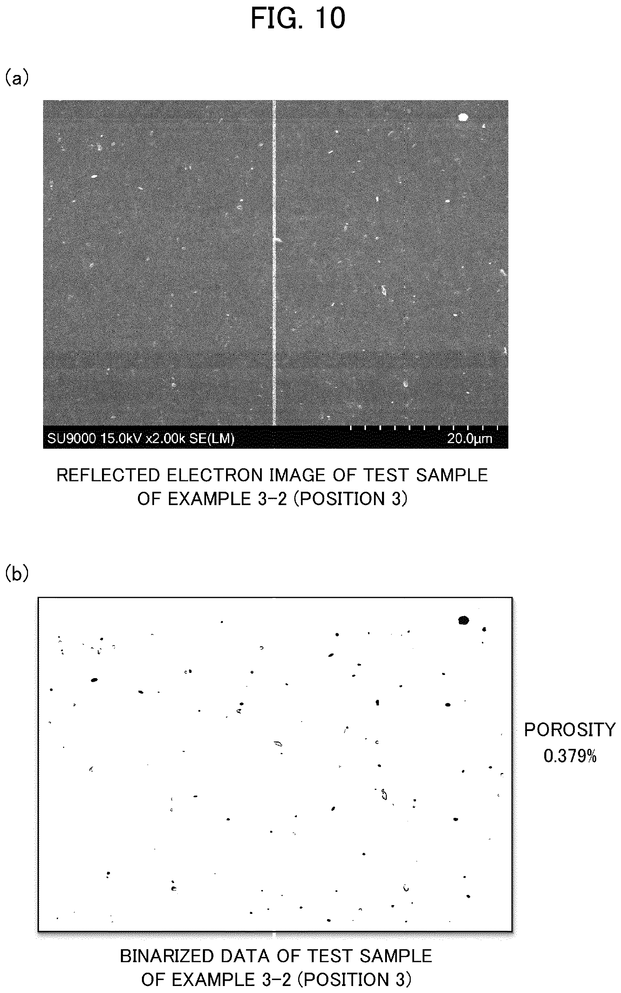

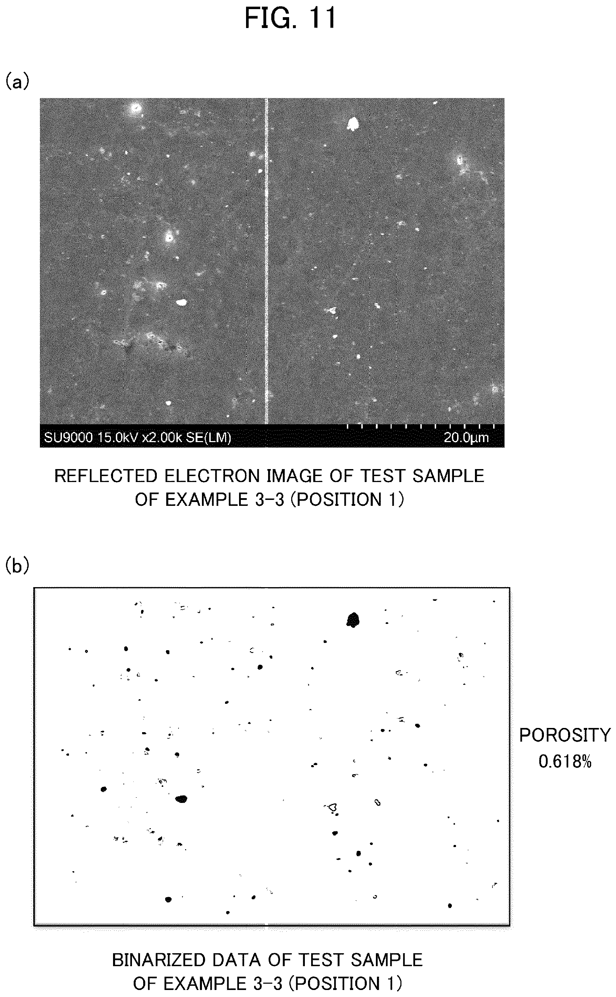

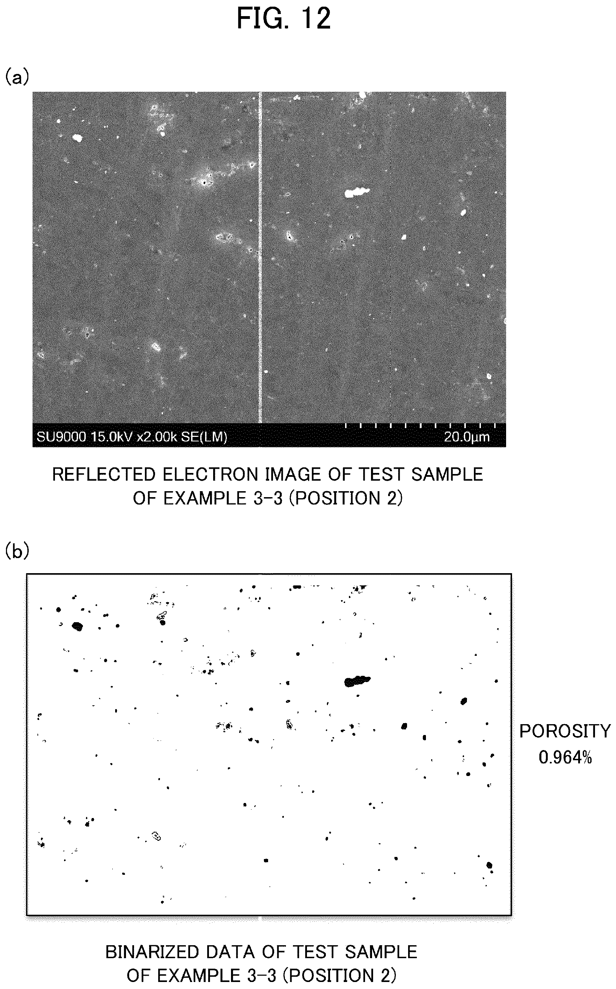

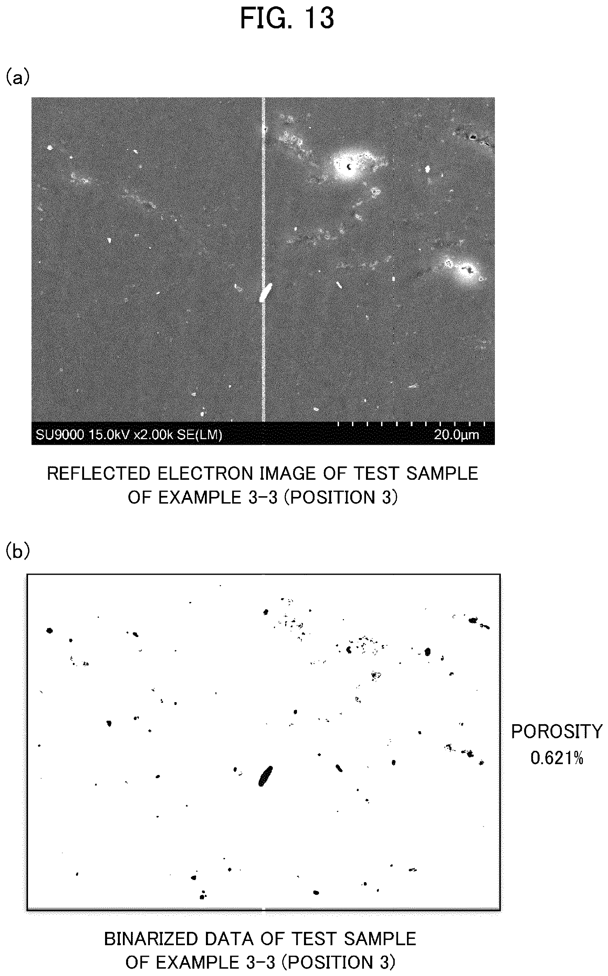

Furthermore, the porosities of the test samples of example 3-2 and example 3-3 were determined in the same manner as that of the test sample of example 3-1. The reflected electron images obtained by observing three points (positions 1 to 3) in the cross section of the test sample of example 3-2 are illustrated in Figs. 8(a), 9(a), and 10(a). Further, the binarized images of the reflected electron images of Figs. 8(a), 9(a), and 10(a) are illustrated in Figs. 8(b), 9(b), and 10(b), respectively. The reflected electron images obtained by observing three points (positions 1 to 3) in the cross section of the test sample of example 3-3 are illustrated in Figs. 11(a), 12(a), and 13(a). Further, the binarized images of the reflected electron images of Figs. 11(a), 12(a), and 13(a) are illustrated in Figs. 11(b), 12(b), and 13(b). Table 3 collectively illustrates porosities of the test samples of example 3-1, example 3-2, and example 3-3.

From example 1, it is evident that the flexural strength and Vickers hardness of the test sample are improved by using mechanochemically treated hydraulic alumina. Further, it is evident that the particles making up the test sample are finer and more uniformly dispersed by using mechanochemically treated hydraulic alumina.

From example 2, since the peak of boehmite is observed, it is evident that the test sample obtained by heating and pressurizing the mixture of hydraulic alumina with water is a structure mainly made from boehmite. It is also evident that the test sample using mechanochemically treated hydraulic alumina has the boehmite crystallite size of 10 nm or less.

From example 3, it is evident that the porosity of the test sample made from mechanochemically treated hydraulic alumina is less than 1%. Thus, it is evident that a boehmite structure having a boehmite crystallite size of 10 nm or less and a porosity of 15% or less has a high flexural strength.

[Example 4]

(Preparation of test samples)

<Example 4-1>

The mechanochemically treated hydraulic alumina prepared in example 1-1 was used as the hydraulic alumina of this example.

<Comparative example 4-1>

Hydraulic alumina BK-112 manufactured by SUMITOMO CHEMICAL COMPANY, LIMITED was used as the hydraulic alumina of this example.

(Microscope observation)

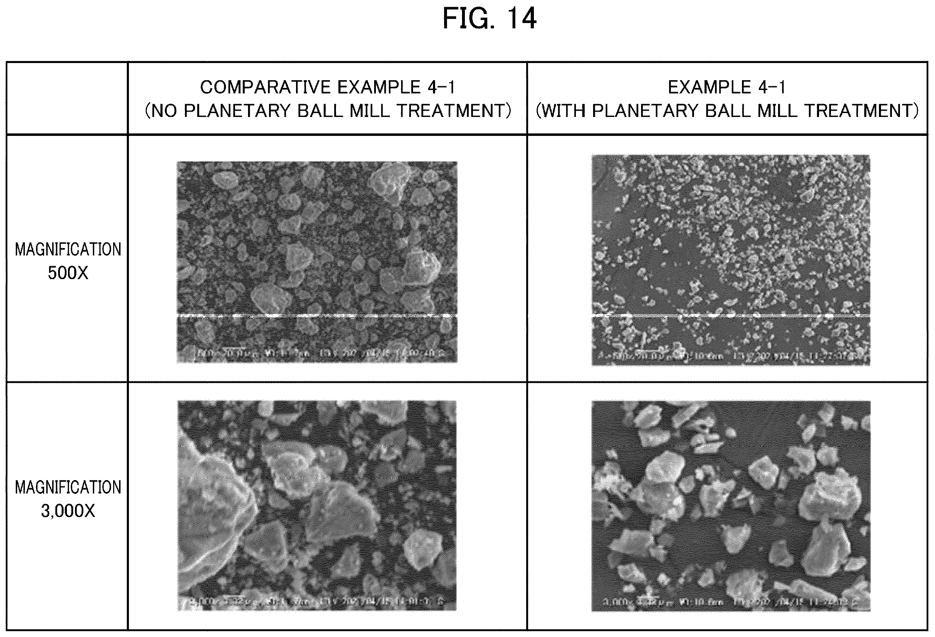

Observations were performed on the particles of the hydraulic alumina of example 4-1 and comparative example 4-1 using a scanning electron microscope. As illustrated in Fig. 14, there were many coarse particles having a particle size exceeding 10 $\mu$m in the hydraulic alumina of comparative example 4-1, which was not mechanochemically treated. In contrast, coarse particles were ground into fine particles having a size of several $\mu$m in the hydraulic alumina of example 4-1, which was mechanochemically treated. Further, it is evident that the hydraulic alumina of example 4-1 has a substantially uniform particle size.

(Simple evaluation of reactivity)

The temperature of the mixture when water was mixed with hydraulic alumina in each example and the temperature of the water were measured, and the temperature change due to the reaction between the hydraulic alumina and water was evaluated. Specifically, 80% by mass ion-exchanged water was mixed with each hydraulic alumina in example 4-1 and comparative example 4-1, and the temperature of the mixtures and the temperature of the ion-exchanged water were measured. Table 4 illustrates the measurement results.

[Table 4]

| Example 4-1 (with mechanochemical treatment) | Comparative example 4-1 (no mechanochemical treatment) |
|---|---|
| +4.7°C (31.8°C) | +2.0°C (29.1°C) |

When ion-exchanged water was mixed with the hydraulic alumina of example 4-1, the temperature of the mixture was 31.8 °C. The temperature of the ion-exchanged water mixed was 27.1 °C. Thus, the temperature increased by 4.7 °C due to the reaction of water with mechanochemically treated hydraulic alumina. In contrast, when ion-exchanged water was mixed with the hydraulic alumina of comparative example 4-1, the temperature of the mixture was 29.1 °C. The temperature of the ion-exchanged water was 27.1 °C. Thus, the temperature increased by 2.0 °C due to the reaction of water with hydraulic alumina without mechanochemical treatment.

Thus, it is evident that by performing the mechanochemical treatment on hydraulic alumina, coarse particles of the hydraulic alumina are ground into fine particles and the specific surface area is improved, and thus the reactivity between hydraulic alumina and water is enhanced.

(Infrared spectroscopic analysis)

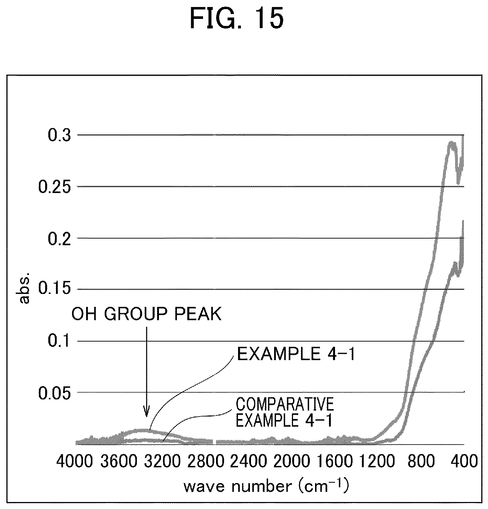

Infrared spectroscopic analysis was performed on the hydraulic alumina of example 4-1 and comparative example 4-1. Specifically, the surface infrared absorption spectrum of the hydraulic alumina of each example was measured using a total reflectance measurement (ATR method). Fig. 15 illustrates the measurement results.

From Fig. 15, an absorption peak due to hydroxy groups (OH groups) was observed in the mechanochemically treated hydraulic alumina of example 4-1. In contrast, an absorption peak due to hydroxy groups (OH groups) was not observed in the non-mechanochemically treated hydraulic alumina of comparative example 4-1. Thus, since the mechanochemically treated hydraulic alumina has hydroxy groups on the particle surface, it is thought that the reactivity with water is improved.

From the simple evaluation of reactivity and infrared spectroscopic analysis, it is evident that the reactivity of mechanochemically treated hydraulic alumina with water is enhanced. Therefore, it is thought that the hydration reaction of hydraulic alumina, interdiffusion between hydraulic alumina particles, and dehydration reaction proceed more efficiently when the mixture of the hydraulic alumina and water is pressurized while being heated, and thus boehmite particles are tightly bonded to each other.

[Example 5]

(Preparation of test samples)

<Example 5-1>

First, as hydraulic alumina, hydraulic alumina BK-112 manufactured by SUMITOMO CHEMICAL COMPANY, LIMITED was prepared. In addition, as zircon ($ZrSiO_4$), zirconium silicate MZ-50B manufactured by DAIICHI KIGENSO KAGAKU KOGYO CO., LTD. was prepared.

Then, the hydraulic alumina and zircon were each weighed to be 50% by volume, and the hydraulic alumina and zircon were subjected to mechanochemical treatment using a planetary ball mill. Specifically, first the hydraulic alumina, zircon, ethanol as a solvent, and hard balls (media) were put into a resin pot. Note that the pot used was made from polyamide and had a volume of 250 mL. The media used were made from zirconia and had a diameter of Φ3mm.

Then, the hydraulic alumina and zircon were ground by treating, with a planetary ball mill, the pot including the hydraulic alumina, zircon, solvent, and hard balls. Note that the planetary ball mill was the same as that of example 1-1. The rotation speed of the pot was set to 200 rpm, and the treatment time was set to 3 hours. Then, the mixture of the hydraulic alumina, zircon, and solvent was taken out from the pot, and the solvent was removed to obtain a mixture of mechanochemically treated hydraulic alumina and zircon.

Next, after ion-exchanged water was weighed to be 80% by mass relative to the hydraulic alumina, the mixture of hydraulic alumina and zircon was mixed with the ion-exchanged water using an agate mortar and pestle to obtain a mixture. Next, the mixture obtained was put into a cylindrical mold (Φ10) having an internal space. The mixture was then heated and pressurized under a condition of 400 MPa, 180 °C, and 20 minutes to obtain a test sample of example 5-1.

<Comparative example 5-1>

First, the same hydraulic alumina and zircon as in example 5-1 were prepared, and then the hydraulic alumina and zircon were each weighed to be 50% by volume. Next, after ion-exchanged water was weighed to be 80% by mass relative to the hydraulic alumina, the hydraulic alumina, zircon, and ion-exchanged water were mixed using an agate mortar and pestle to obtain a mixture. Next, the mixture obtained was put into a cylindrical mold (Φ10) having an internal space. The mixture was then heated and pressurized under a condition of 400 MPa, 180 °C, and 20 minutes to obtain a test sample of comparative example 5-1. That is, the test sample of comparative example 5-1 is a sample in which hydraulic alumina and zircon are not subjected to mechanochemical treatment.

(Measurement of flexural strength)

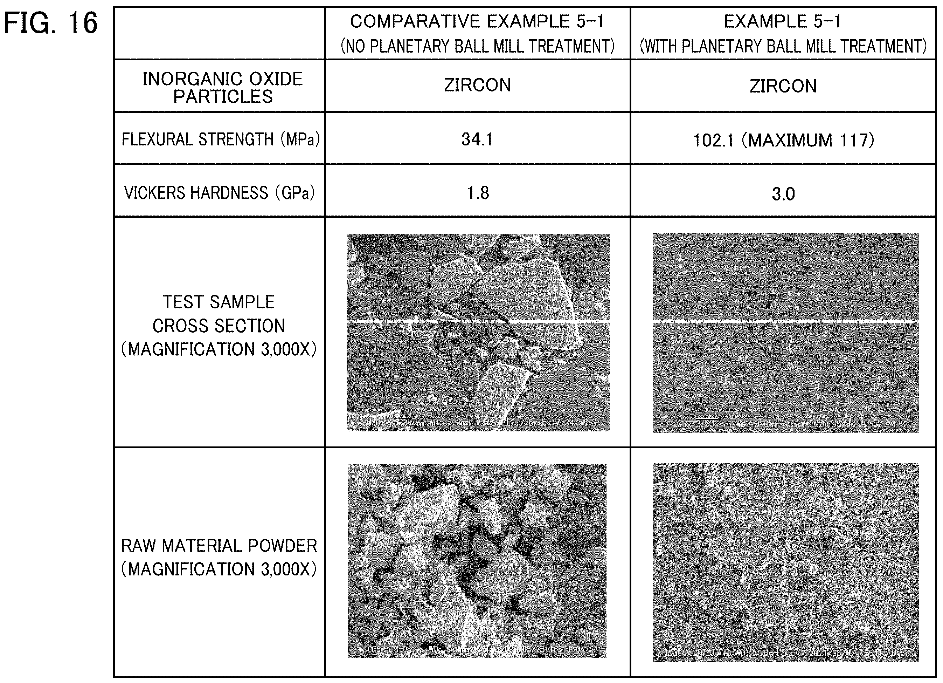

Flexural strength was measured in accordance with JIS T6526 for the test samples of example 5-1 and comparative example 5-1. Consequently, as illustrated in Fig. 16, the flexural strength of the test sample of example 5-1 was 102.1 MPa. In contrast, the flexural strength of the test sample of comparative example 5-1 was 34.1 MPa.

(Vickers hardness measurement)

Vickers hardness was measured in accordance with JIS R1610 for the test samples of example 5-1 and comparative example 5-1. As illustrated in Fig. 16, the Vickers hardness of the test sample of example 5-1 was 3.0 GPa. In contrast, the Vickers hardness of the test sample of comparative example 5-1 was 1.8 GPa.

(Microscopic observation)

Cross-sectional observations were performed on the test samples of example 5-1 and comparative example 5-1 using a scanning electron microscope. Consequently, as illustrated in Fig. 16, it is evident that many coarse particles are present in the test sample of comparative example 5-1. In contrast, it is evident that no coarse particles are present in the test sample of example 5-1. That is, it is evident that boehmite particles and zircon particles are finer and more uniform in the test sample of example 5-1 than in comparative example 5-1.

In addition, Fig. 16 also illustrates scanning electron micrographs of mixtures of hydraulic alumina and zircon prior to pressure heating treatment. It is evident from Fig. 16 that the mixture of hydraulic alumina and zircon in comparative example 5-1 includes a large number of coarse particles. In contrast, it is evident that the mixture of hydraulic alumina and zircon in example 5-1 does not include coarse particles as a result of refining the particles through mechanochemical treatment.

As described above, the hydraulic alumina and zircon are ground and mixed almost uniformly through the mechanochemical treatment, and thus boehmite and zircon are firmly fixed in the test sample obtained. Thus, it is evident that the test sample gives good results in both flexural strength and Vickers hardness. From Figs. 3 and 16, it becomes possible to further enhance the flexural strength and Vickers hardness of the obtained test sample by including zircon as inorganic oxide particles.

[Example 6]

(Preparation of test samples)

<Example 6-1>

First, as hydraulic alumina, hydraulic alumina BK-112 manufactured by SUMITOMO CHEMICAL COMPANY, LIMITED was prepared. In addition, as alumina ($Al_2O_3$), advanced alumina AA-03 manufactured by SUMITOMO CHEMICAL COMPANY, LIMITED was prepared. Note that the advanced alumina AA-03 is a single crystal particle of α-alumina having a shape close to a polyhedral spherical shape, and the center particle size is 0.40 μm.

Then, the hydraulic alumina and alumina powder were each weighed to be 50% by volume, and the hydraulic alumina and alumina powder were subjected to mechanochemical treatment using a planetary ball mill. Specifically, the hydraulic alumina, alumina powder, ethanol as a solvent, and hard balls (media) were put into a resin pot. Note that the pot used was made from polyamide and had a volume of 250 mL. The media used were made from zirconia and had a diameter of Φ3mm.

Then, the hydraulic alumina was ground by treating, with a planetary ball mill, the pot including the hydraulic alumina, alumina powder, solvent and hard balls. Note that the planetary ball mill was the same as that of example 1-1. The rotation speed of the pot was set to 250 rpm, and the treatment time was set to 3 hours. Then, the mixture of the hydraulic alumina, alumina powder, and solvent was taken out from the pot, and the solvent was removed to obtain a mixture of hydraulic alumina and alumina powder which were mechanochemically treated.

Next, after ion-exchanged water was weighed to be 80% by mass relative to the hydraulic alumina, the mixture of hydraulic alumina and alumina powder was mixed with the ion-exchanged water using an agate mortar and pestle to obtain a mixture. Next, the mixture obtained was put into a cylindrical mold (Φ10) having an internal space. The mixture was then heated and pressurized under a condition of 400 MPa, 180 °C, and 20 minutes to obtain a test sample of example 6-1.

<Example 6-2>

A test sample of example 6-2 was obtained in the same manner as in example 6-1 except that cordierite ($2MgO \cdot 2Al_2O_3 \cdot 5SiO_2$) was used instead of alumina (advanced alumina AA-03). Note that as cordierite, SS-200 (average particle size 7.5 $\mu$m) manufactured by MARUSU GLAZE Co., Ltd. was used.

(Measurement of flexural strength)

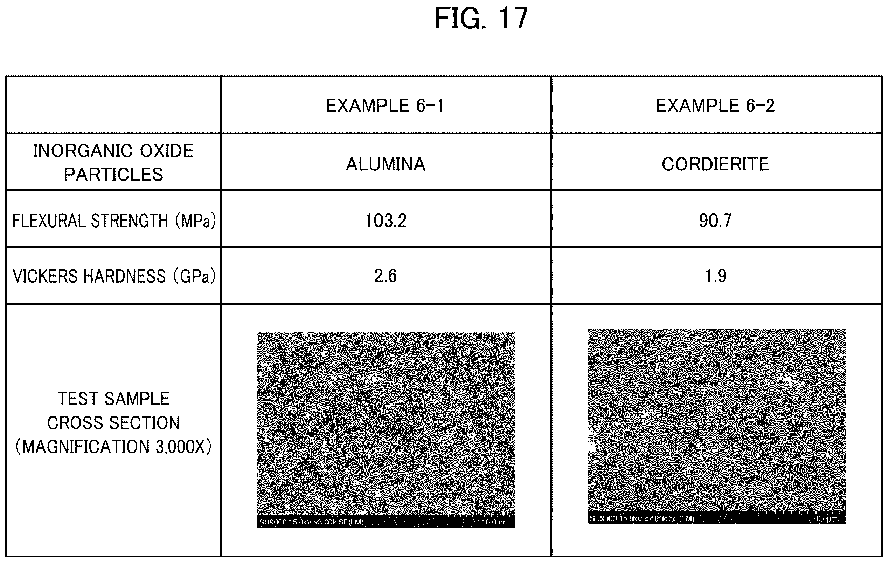

Flexural strength was measured in accordance with JIS T6526 for the test samples of example 6-1 and example 6-2. Consequently, as illustrated in Fig. 17, the flexural strength of the test sample of example 6-1 was 103.2 MPa. The flexural strength of the test sample of example 6-2 was 90.7 MPa.

(Vickers hardness measurement)

Vickers hardness was measured in accordance with JIS R1610 for the test samples of example 6-1 and example 6-2. As illustrated in Fig. 17, the Vickers hardness of the test sample of example 6-1 was 2.6 GPa. The Vickers hardness of the test sample of example 6-2 was 1.9 GPa.

From Figs. 3 and 17, it becomes possible to further enhance the flexural strength of the test sample obtained by including alumina or cordierite as inorganic oxide particles.

(Microscopic observation)

Cross-sectional observations were performed on the test samples of example 6-1 and example 6-2 using a scanning electron microscope. Consequently, as illustrated in Fig. 17, it is evident that no coarse particles are present in any of the test samples of example 6-1 and example 6-2. That is, it is evident that boehmite particles and inorganic oxide particles are finer and more uniform in the test samples of example 6-1 and example 6-2.

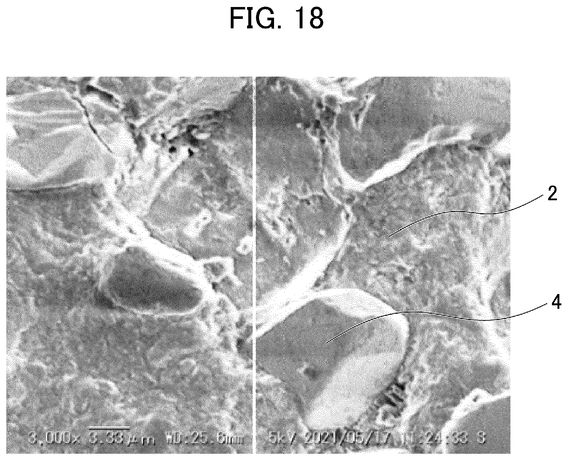

Fig. 18 illustrates the result of observing the cross section of the test sample of example 6-1 using a scanning electron microscope. It is evident from Fig. 18 that the boehmite particles 2 made from the boehmite phase are an indefinite shape crystal in the test sample. That is, it is evident that the boehmite particles 2 have many irregularities on the surface and the shape is not constant. In contrast, it is evident that the inorganic oxide particles 4 made from α-alumina have a particle shape and further have faceted surfaces on the particle surface.

Although the present embodiment has been described above, the present embodiment is not limited thereto, and various modifications are possible within the scope of the present embodiment.

INDUSTRIAL APPLICABILITY

The present disclosure provides a boehmite structure having high strength and a method for producing the boehmite structure.

REFERENCE SIGNS LIST

1, 1A   Boehmite structure
2       Boehmite particles
3       Pores
4       Inorganic oxide particles

**Claims**

1.  A boehmite structure (1), comprising:

    a plurality of boehmite particles (2) where adjacent boehmite particles (2) are bonded to each other, wherein a boehmite crystallite size is 10 nm or less, and

the boehmite structure (1) has a porosity of 15% or less.

2. The boehmite structure (1) according to claim 1, wherein a flexural strength measured in accordance with JIS T6526 is 50 MPa or more.

3. The boehmite structure (1) according to claim 1 or 2, further comprising: inorganic oxide particles (4).

4. The boehmite structure (1) according to any one of claims 1 to 3, wherein a boehmite phase is an indefinite shape crystal.

5. The boehmite structure (1) according to claim 3, wherein an average particle size of the inorganic oxide particles (4) is 5 $\mu$m or less.

6. The boehmite structure (1) according to claim 3 or 5, wherein Vickers hardness of the inorganic oxide particles (4) is 10 GPa or less.

7. The boehmite structure (1) according to any one of claims 3, 5, and 6, wherein an elastic modulus of the inorganic oxide particles (4) is 320 GPa or less.

8. The boehmite structure (1) according to any one of claims 3 and 5 to 7, wherein the inorganic oxide particles (4) comprise silicon.

9. A method for producing a boehmite structure (1), comprising:

    a mixing step of obtaining a mixture by mixing mechanochemically treated hydraulic alumina with a solvent including water; and
    a pressure heating step of pressurizing and heating the mixture under a condition of a pressure of 10 to 600 MPa and a temperature of 50 to 300 °C.

10. The method for producing the boehmite structure (1) according to claim 9, wherein
    the mixing step is a step of obtaining the mixture by mixing the mechanochemically treated hydraulic alumina and inorganic oxide particles (4) with the solvent including water.

**Patentansprüche**

1. Eine Böhmitstruktur (1), umfassend:

    eine Vielzahl von Böhmitpartikeln (2), bei denen benachbarte Böhmitpartikel (2) miteinander verbunden sind, wobei
    eine Böhmitkristallitgröße 10 nm oder weniger beträgt, und
    die Böhmitstruktur (1) eine Porosität von 15 % oder weniger aufweist.

2. Die Böhmitstruktur (1) nach Anspruch 1, wobei eine gemäß JIS T6526 gemessene Biegefestigkeit 50 MPa oder mehr beträgt.

3. Die Böhmitstruktur (1) nach Anspruch 1 oder 2, weiter umfassend: anorganische Oxidpartikel (4).

4. Die Böhmitstruktur (1) nach einem der Ansprüche 1 bis 3, wobei eine Böhmitphase ein Kristall unbestimmter Form ist.

5. Die Böhmitstruktur (1) nach Anspruch 3, wobei eine durchschnittliche Partikelgröße der anorganischen Oxidpartikel (4) 5 $\mu$m oder weniger beträgt.

6. Die Böhmitstruktur (1) nach Anspruch 3 oder 5, wobei eine Vickers-Härte der anorganischen Oxidpartikel (4) 10 GPa oder weniger beträgt.

7. Die Böhmitstruktur (1) nach einem der Ansprüche 3, 5, und 6, wobei ein Elastizitätsmodul der anorganischen Oxidpartikel (4) 320 GPa oder weniger beträgt.

8. Die Böhmitstruktur (1) nach einem der Ansprüche 3 und 5 bis 7, wobei die anorganischen Oxidpartikel (4) Silizium umfassen.

9. Verfahren zur Herstellung einer Böhmitstruktur (1), umfassend:

   einen Mischschritt zum Erhalten eines Gemisches durch Mischen von mechanochemisch behandeltem hydraulischem Aluminiumoxid mit einem Lösungsmittel, das Wasser enthält; und
   einen Druckheizschritt zum unter Druck setzen und Erwärmen des Gemisches unter einer Bedingung eines Drucks von 10 bis 600 MPa und einer Temperatur von 50 bis 300 °C.

10. Verfahren zur Herstellung einer Böhmitstruktur (1) nach Anspruch 9, wobei
    der Mischschritt ein Schritt zum Erhalten eines Gemisches durch Mischen des mechanochemisch behandelten hydraulischen Aluminiumoxids und der anorganischen Oxidpartikel (4) mit dem Lösungsmittel, das Wasser enthält, ist.


**Revendications**

1. Structure en boehmite (1), comprenant :

   une pluralité de particules de boehmite (2) où des particules de boehmite adjacentes (2) sont liées l'une à l'autre, dans laquelle
   une taille de cristallite de boehmite est de 10 nm ou moins, et
   la structure en boehmite (1) a une porosité de 15 % ou moins.

2. Structure en boehmite (1) selon la revendication 1, dans laquelle une résistance à la flexion mesurée conformément à JI T6526 est de 50 MPa ou plus.

3. Structure en boehmite (1) selon la revendication 1 ou 2, comprenant en outre :
   des particules d'oxyde inorganique (4).

4. Structure en boehmite (1) selon l'une quelconque des revendications 1 à 3, dans laquelle une phase de boehmite est un cristal de forme indéfinie.

5. Structure en boehmite (1) selon la revendication 3, dans laquelle une taille particulaire moyenne des particules d'oxyde inorganique (4) est de 5 $\mu$m ou moins.

6. Structure en boehmite (1) selon la revendication 3 ou 5, dans laquelle la dureté Vickers des particules d'oxyde inorganique (4) est de 10 GPa ou moins.

7. Structure en boehmite (1) selon l'une quelconque des revendications 3, 5 et 6, dans laquelle un module élastique des particules d'oxyde inorganique (4) est de 320 GPa ou moins.

8. Structure en boehmite (1) selon l'une quelconque des revendications 3 et 5 à 7, dans laquelle les particules d'oxyde inorganique (4) comprennent du silicium.

9. Procédé de production d'une structure en boehmite (1), comprenant :

   une étape de mélange consistant à obtenir un mélange en mélangeant de l'alumine hydraulique traitée de manière mécanochimique avec un solvant incluant de l'eau ; et
   une étape de chauffage sous pression consistant à pressuriser et chauffer le mélange à une condition d'une pression de 10 à 600 MPa et d'une température de 50 à 300 °C.

10. Procédé de production de la structure en boehmite (1) selon la revendication 9, dans lequel
    l'étape de mélange est une étape d'obtention du mélange en mélangeant l'alumine hydraulique traitée de manière mécanochimique et les particules d'oxyde inorganique (4) avec le solvant incluant de l'eau.

# FIG. 1

# FIG. 2

EP 4 421 051 B1

# FIG. 3

| | | COMPARATIVE EXAMPLE 1-1 (NO PLANETARY BALL MILL TREATMENT) | EXAMPLE 1-1 (WITH PLANETARY BALL MILL TREATMENT) |
|---|---|---|---|
| FLEXURAL STRENGTH (MPa) | | 51.4 | 83.2 |
| VICKERS HARDNESS (GPa) | | 1.87 | 2.48 |
| TEST SAMPLE SURFACE | MAGNIFICATION 1,000X | | |
| | MAGNIFICATION 3,000X | | |

EP 4 421 051 B1

FIG. 4

# FIG. 5

(a)

REFLECTED ELECTRON IMAGE OF TEST SAMPLE
OF EXAMPLE 3-1 (POSITION 1)

(b)

POROSITY
0.255%

BINARIZED DATA OF TEST SAMPLE
OF EXAMPLE 3-1 (POSITION 1)

# FIG. 6

(a)

REFLECTED ELECTRON IMAGE OF TEST SAMPLE
OF EXAMPLE 3-1 (POSITION 2)

(b)

POROSITY
0.585%

BINARIZED DATA OF TEST SAMPLE
OF EXAMPLE 3-1 (POSITION 2)

# FIG. 7

(a)

REFLECTED ELECTRON IMAGE OF TEST SAMPLE
OF EXAMPLE 3-1 (POSITION 3)

(b)

POROSITY
0.249%

BINARIZED DATA OF TEST SAMPLE
OF EXAMPLE 3-1 (POSITION 3)

# FIG. 8

(a)

REFLECTED ELECTRON IMAGE OF TEST SAMPLE
OF EXAMPLE 3-2 (POSITION 1)

(b)

POROSITY
0.629%

BINARIZED DATA OF TEST SAMPLE
OF EXAMPLE 3-2 (POSITION 1)

# FIG. 9

(a)

REFLECTED ELECTRON IMAGE OF TEST SAMPLE
OF EXAMPLE 3-2 (POSITION 2)

(b)

POROSITY
0.225%

BINARIZED DATA OF TEST SAMPLE
OF EXAMPLE 3-2 (POSITION 2)

# FIG. 10

(a)

REFLECTED ELECTRON IMAGE OF TEST SAMPLE
OF EXAMPLE 3-2 (POSITION 3)

(b)

POROSITY
0.379%

BINARIZED DATA OF TEST SAMPLE
OF EXAMPLE 3-2 (POSITION 3)

# FIG. 11

(a)

REFLECTED ELECTRON IMAGE OF TEST SAMPLE
OF EXAMPLE 3-3 (POSITION 1)

(b)

POROSITY
0.618%

BINARIZED DATA OF TEST SAMPLE
OF EXAMPLE 3-3 (POSITION 1)

# FIG. 12

(a)

REFLECTED ELECTRON IMAGE OF TEST SAMPLE
OF EXAMPLE 3-3 (POSITION 2)

(b)

POROSITY
0.964%

BINARIZED DATA OF TEST SAMPLE
OF EXAMPLE 3-3 (POSITION 2)

# FIG. 13

(a)

REFLECTED ELECTRON IMAGE OF TEST SAMPLE
OF EXAMPLE 3-3 (POSITION 3)

(b)

POROSITY
0.621%

BINARIZED DATA OF TEST SAMPLE
OF EXAMPLE 3-3 (POSITION 3)

# FIG. 14

| | COMPARATIVE EXAMPLE 4-1<br>(NO PLANETARY BALL MILL TREATMENT) | EXAMPLE 4-1<br>(WITH PLANETARY BALL MILL TREATMENT) |
|---|---|---|
| MAGNIFICATION<br>500X | | |
| MAGNIFICATION<br>3,000X | | |

EP 4 421 051 B1

# FIG. 15

**FIG. 16**

| | COMPARATIVE EXAMPLE 5-1 (NO PLANETARY BALL MILL TREATMENT) | EXAMPLE 5-1 (WITH PLANETARY BALL MILL TREATMENT) |
|---|---|---|
| INORGANIC OXIDE PARTICLES | ZIRCON | ZIRCON |
| FLEXURAL STRENGTH (MPa) | 34.1 | 102.1 (MAXIMUM 117) |
| VICKERS HARDNESS (GPa) | 1.8 | 3.0 |
| TEST SAMPLE CROSS SECTION (MAGNIFICATION 3,000X) | | |
| RAW MATERIAL POWDER (MAGNIFICATION 3,000X) | | |

EP 4 421 051 B1

# FIG. 17

| | EXAMPLE 6-1 | EXAMPLE 6-2 |
|---|---|---|
| INORGANIC OXIDE PARTICLES | ALUMINA | CORDIERITE |
| FLEXURAL STRENGTH (MPa) | 103.2 | 90.7 |
| VICKERS HARDNESS (GPa) | 2.6 | 1.9 |
| TEST SAMPLE CROSS SECTION (MAGNIFICATION 3,000X) | | |

EP 4 421 051 B1

FIG. 18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021075416 A
- WO 2020235277 A1
- JP 2003238150 A